# EUROPEAN PATENT APPLICATION

(11) **EP 4 484 504 A1**
(43) Date of publication of application: **01.01.2025**
(21) Application number: 23182859.1
(22) Date of filing: 30.06.2023
(51) Int. Cl.: C09D 5/16, C09D 7/63

(54) **ANTIFOULING COMPOSITION**

(71) Applicant: Jotun A/S, 3202 Sandefjord (NO)
(72) Inventor: Dahling, Marit, 3218 Sandefjord (NO); Hanssen, Karoline, 3209 Sandefjord (NO); Trondsen, Gaute, 3233 Sandefjorde (NO)
(74) Representative: Dehns

(57) **Abstract**

An antifouling coating composition comprising:
(i) a (meth)acrylic silyl ester copolymer comprising at least 15 wt% silyl ester monomers, relative to the total weight of monomers present in the (meth)acrylic silyl ester copolymer; and/or
(ii) a (meth)acrylic copolymer comprising 10 wt% or less of silyl ester monomers and 5.0 wt% or less of metal ester monomers, relative to the total weight of monomers present in the (meth)acrylic copolymer, which has a Tg of 10.0 °C or more;
(iii) rosin, modified rosin or a metal salt of rosin or a modified rosin;
(iv) biocides comprising:
a. medetomidine; and
b. one or more copper compounds having a copper content of at least 40 wt%, relative to the formula weight of the copper compound, wherein the coating composition as a whole comprises 10.0 wt% or less of biocides;

(v) a (meth)acrylic copolymer comprising 10 wt% or less of silyl ester monomers and 5.0 wt% or less of metal ester monomers, relative to the total weight of monomers present in the (meth)acrylic copolymer, which has a Tg below 10.0 °C, preferably below 0 °C, more preferred below - 5 °C, even more preferred below -10 °C, comprising
a. monomer of formula II: 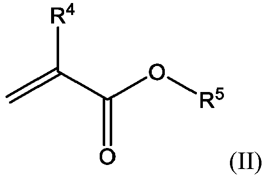 wherein R⁴ is H or CH₃, and R⁵ is a C1-C20 hydrocarbyl substituent; and
b. 0.5 to 10 wt% of at least one carboxylic acid containing monomer; and

(vi) at least 35 wt% of pigments, extenders and biocides combined, relative to the total weight of the coating composition as a whole.

## Description

### Field of the Invention

The present invention relates to marine antifouling coating compositions, more specifically to antifouling coating compositions comprising biocides in an amount of 10.0 wt% or less, wherein the biocides comprise medetomidine and a copper compound having a copper content of at least 40 wt%. The compositions additionally contain a rosin, a modified rosin or metal salts thereof, and a specific (meth)acrylic copolymer. The invention further relates to a method of protecting objects from fouling, and to objects coated with the antifouling composition of the invention.

### Background of invention

Surfaces that are submerged in seawater are subjected to fouling by marine organisms such as green and brown algae, barnacles, mussels, tube worms and the like. On marine constructions such as vessels, oil platforms, buoys, etc. such fouling is undesired and has economic consequences. The fouling may lead to biological degradation of the surface, increased load and accelerated corrosion. On vessels the fouling will increase the frictional resistance which will cause reduced speed and/or increased fuel consumption.

To prevent settlement and growth of marine organisms, antifouling paints are used. These paints generally comprise a film-forming binder, together with different components such as pigments, extenders, additives and solvents together with biologically active substances (biocides). Biocides can be broadly divided into those active against soft fouling, such as green and brown algae, grass, slime and those active against hard fouling, such as barnacles, mussels, tube worms etc.

The largest product segment for antifouling coating systems on merchant vessels is self-polishing antifouling coatings (SPC). The majority of the products are copper based with a relatively high total content of biocides, pigments and extenders. The commercial copper containing products typically contain 20-50 % by weight of copper(I) oxide, which is known to have good activity against hard fouling, and an additional 1-10 % by weight of organic biocides, which are mainly active against soft fouling, to broaden the antifouling activity spectrum of the products. One of the success factors with SPC products is that the polishing rate can be adjusted to maximise their effectiveness on vessels with different operational speeds and activity.

There is a limited number of biocides approved for use as marine antifouling agents by regulatory bodies. The approved biocides are considered safe to use and without adverse environmental effects. However, it is still important to optimize the effect of the combination of biocides in the coating film to limit their use to a minimum. Restrictions on the use of biocides are increasing and it is likely that in the future the amounts of biocides in antifouling coatings will have to be significantly reduced. When reducing the amounts of biocides there is a challenge in maintaining good long term antifouling performance.

Low biocide formulations are generally associated with formulations having a low content of pigments and extenders often in combination with polysiloxane binders or binders having polysiloxane blocks and/or added silicone oils. An example of commercial products are biocidal fouling release coatings (FRC). Reducing the biocide to low levels in conventional self-polishing antifouling coatings will require a full or part replacement of biocides by other components. That will have consequences for the self-polishing properties, mechanical properties and antifouling performance of the coating, unless the formulation is carefully redesigned. There thus remains a need to develop new self-polishing antifouling coating compositions which contain reduced levels of biocides.

Medetomidine is an organic biocide which has specific actions against hard fouling, and in particular barnacle cyprids. Medetomidine is sold under the trade name Selektope and the supplier's product datasheet recommend using between 0.1 and 0.3 wt% in combination with an algicide in antifouling coating compositions in order to obtain full protection against marine fouling. When medetomidine is used as the only biocide active against hard fouling there is a challenge with achieving sufficient antifouling performance due to its specific biological activity.

The present inventors have surprisingly found that combining medetomidine with a copper compound as defined herein, self-polishing antifouling coating compositions with 10 wt% or less total biocides can be prepared. Such coating compositions have unexpectedly attractive antifouling properties despite the low levels of biocides, in particular the low amounts of copper compounds present.

### Summary of invention

In one aspect, the invention relates to an antifouling coating composition comprising:
(i) a (meth)acrylic silyl ester copolymer comprising at least 15 wt% silyl ester monomers, relative to the total weight of monomers present in the (meth)acrylic silyl ester copolymer; and/or
(ii) a (meth)acrylic copolymer comprising 10 wt% or less of silyl ester monomers and 5.0 wt% or less of metal ester monomers, relative to the total weight of monomers present in the (meth)acrylic copolymer, which has a Tg of 10.0 °C or more;
(iii) rosin, modified rosin or a metal salt of rosin or a modified rosin;
(iv) biocides comprising:
   a. medetomidine; and
   b. one or more copper compounds having a copper content of at least 40 wt%, relative to the formula weight of the copper compound,
      wherein the coating composition as a whole comprises 10.0 wt% or less of biocides;
(v) a (meth)acrylic copolymer comprising 10 wt% or less of silyl ester monomers and 5.0 wt% or less of metal ester monomers, relative to the total weight of monomers present in the (meth)acrylic copolymer, which has a Tg below 10.0 °C, preferably below 0 °C, more preferred below - 5 °C, even more preferred below -10 °C, comprising
   a. monomer of formula II: 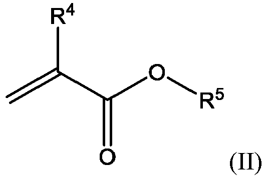 wherein R⁴ is H or CH₃, and R⁵ is a C1-C20 hydrocarbyl substituent; and
   b. 0.5 to 10 wt% of at least one carboxylic acid containing monomer; and
(vi) at least 35 wt% of pigments, extenders and biocides combined, relative to the total weight of the coating composition as a whole.

In another aspect, the invention relates to an antifouling coating composition comprising:
(i) a (meth)acrylic silyl ester copolymer comprising at least 15 wt% silyl ester monomers, relative to the total weight of monomers present in the (meth)acrylic silyl ester copolymer;
(iii) rosin, modified rosin or a metal saltof rosin or a modified rosin;
(iv) biocides comprising:
   a. medetomidine; and
   b. one or more copper compounds having a copper content of at least 40 wt%, relative to the formula weight of the copper compound,
      wherein the coating composition as a whole comprises 10.0 wt% or less of biocides;
(v) a (meth)acrylic copolymer comprising 10 wt% or less of silyl ester monomers and 5.0 wt% or less of metal ester monomers, relative to the total weight of monomers present in the (meth)acrylic copolymer, which has a Tg below 10.0 °C, preferably below 0 °C, more preferred below - 5 °C, even more preferred below -10 °C, comprising
   a. monomer of formula II: 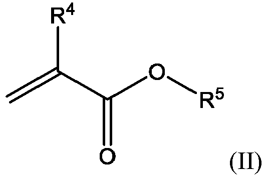 wherein R⁴ is H or CH₃, and R⁵ is a C1-C20 hydrocarbyl substituent; and
   b. 0.5 to 10 wt% of at least one carboxylic acid containing monomer; and
(vi) at least 35 wt% of pigments, extenders and biocides combined, relative to the total weight of the coating composition as a whole.

In one aspect, the invention relates to an antifouling coating composition comprising:
(ii) a (meth)acrylic copolymer comprising 10 wt% or less of silyl ester monomers and 5.0 wt% or less of metal ester monomers, relative to the total weight of monomers present in the (meth)acrylic copolymer, which has a Tg of 10.0 °C or more;
(iii) rosin, modified rosin or a metal salt of rosin or a modified rosin;
(iv) biocides comprising:
   a. medetomidine; and
   b. one or more copper compounds having a copper content of at least 40 wt%, relative to the formula weight of the copper compound,
      wherein the coating composition as a whole comprises 10.0 wt% or less of biocides; and
(v) a (meth)acrylic copolymer comprising 10 wt% or less of silyl ester monomers and 5.0 wt% or less of metal ester monomers, relative to the total weight of monomers present in the (meth)acrylic copolymer, which has a Tg below 10.0 °C, preferably below 0 °C, more preferred below - 5 °C, even more preferred below -10 °C, comprising
   a. monomer of formula II: 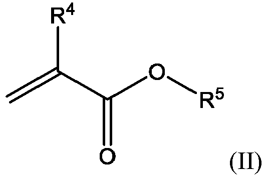 wherein R⁴ is H or CH₃, and R⁵ is a C1-C20 hydrocarbyl substituent; and
   b. 0.5 to 10 wt% of at least one carboxylic acid containing monomer; and
(iv) at least 35 wt% of pigments, extenders and biocides combined, relative to the total weight of the coating composition as a whole.

In a further aspect, the invention relates to a process for protecting an object from fouling, said process comprising coating at least a part of said object which is subject to fouling with an antifouling coating composition as hereinbefore defined.

In another aspect, the invention relates to an object coated with the antifouling coating composition as hereinbefore defined.

### Definitions

As used herein the terms "marine antifouling coating composition", "antifouling coating composition" or simply "coating composition" refer to a composition that, when applied to a surface, prevents or minimises growth of marine organisms on the surface.

The antifouling coating compositions of the invention are "self-polishing" coatings. By "self-polishing" or "polishing" we mean that the coating is subject to a reduction in the film thickness due to removal of coating material at the surface of the coating film over time as the result of degradation and/or erosion by the surrounding water medium.

As used herein the term "paint" refers to a composition comprising the antifouling coating composition as herein described and optionally solvent, which is ready for use, e.g. for spraying. Thus, the antifouling coating composition may itself be a paint or the coating composition may be a concentrate to which solvent is added to produce a paint.

As used herein the term "(meth)acrylic copolymer" and "(meth)acrylic silyl ester copolymer" refers to polymers comprising repeating units derived from (meth)acrylate monomers. Generally, a (meth)acrylic copolymer or a (meth)acrylic silyl ester copolymer will comprise at least 80 wt% of repeating units derived from (meth)acrylate monomers, i.e. acrylate and/or methacrylate monomers.

Where a wt% of a given monomer is given for a polymer, the wt% is relative to the sum total (weight) of monomers present in the copolymer.

As used herein the term "hydrocarbyl group" refers to any group containing C atoms and H atoms only and therefore covers alkyl, aryl, cycloalkyl, arylalkyl groups and so on.

As used herein the term "alkyl" refers to saturated, straight chained, or branched groups.

As used herein the term "cycloalkyl" refers to a cyclic alkyl group.

As used herein the term "alkylene" refers to a bivalent alkyl group.

As used herein the term "aryl" refers to a group comprising at least one aromatic ring. Aryl groups may be substituted or unsubstituted. An example of an aryl group is phenyl, i.e. C₆H₅. Phenyl groups may be substituted or unsubstituted.

As used herein the term "(meth)acrylate" encompasses both methacrylate and acrylate.

As used herein the term "volatile organic compound (VOC)" refers to a compound having a boiling point of 250 °C or less at standard atmospheric pressure of 1 atm.

As used herein "antifouling agent" or "biocide" refers to a biologically active compound or mixture of biologically active compounds that prevents or minimises the settlement and/or the growth of marine organisms on a surface.

The term "binder" defines part of the composition which includes components (i), (ii), (iii) and (v) as defined herein and any other components which together form a matrix giving strength and/or flexibility to the coating film.

The term "Tg" means glass transition temperature.

The term "modified rosin" as used herein refers to rosin that has been chemically modified but still contains a carboxylic acid group. Example of suitable modification is for example hydrogenation. Rosin esters are not covered by the term "modified rosin" in the present invention as they do not comprise a carboxylic acid group.

The term "wt% based on the total weight of the composition" refers to the wt% of a component present in the total coating composition, unless otherwise specified.

As used herein the term "wt% based on the total dry weight of the composition" refers to the wt% of a dry component present in the dry weight of the coating composition, i.e. excluding solvents and other volatiles, unless otherwise specified.

It may be for any polymeric component of the antifouling composition of the invention that a blend of polymers is used. For example component (i) may comprise a blend of two (meth)acrylic copolymers comprising silyl ester groups. If such a blend is used then the wt% values given for a particular component refer to the combined weight of all relevant polymers.

### Detailed description of invention

The invention relates to a new antifouling coating composition comprising a (meth)acrylic copolymer (v); rosin, modified rosin or a metal salt of rosin or a modified rosin (iii); and biocides comprising medetomidine (iv-a) and a copper compound (iv-b) in an amount of 10.0 wt% or less. The antifouling coating composition also contains one of (i) a (meth)acrylic silyl ester copolymer and/or (ii) a (meth)acrylic copolymer as herein defined. It will be appreciated that components (i), (ii) and (v) are different.

The binder of the invention comprises components (i) to (iii) and (v), which ever present.

In one preferred embodiment the antifouling coating composition of the invention comprises a (meth)acrylic silyl ester copolymer (i) as herein defined.

In a second preferred embodiment the antifouling coating composition of the invention comprises both a (meth)acrylic silyl ester copolymer (i) and a (meth)acrylic copolymer (ii) as defined herein.

In a third preferred embodiment the antifouling coating composition of the invention comprises a (meth)acrylic copolymer (ii) as defined herein.

### (Meth)acrylic silyl ester copolymer (i)

The use of (meth)acrylic silyl ester copolymers in antifouling coating compositions is well known and, in its broadest embodiment, the invention covers any of these well-known copolymers.

The (meth)acrylic silyl ester copolymers (i) comprise repeating units derived from (meth)acrylate monomers. Preferably the (meth)acrylic silyl ester copolymer (i) comprises at least 80 wt% of the repeating units derived from (meth)acrylate monomers, i.e. acrylate and/or methacrylate monomers. It is further preferred if the (meth)acrylic silyl ester copolymer (i) comprises at least 85 wt%, more preferably at least 90 wt% and still more preferably at least 95 wt% repeating units derived from (meth)acrylate monomers. Preferred (meth)acrylic silyl ester copolymers present in the composition of the present invention comprise 80 to 100 wt%, more preferably 85 to 100 wt% and still more preferably 90 to 100 wt% repeating units derived from (meth)acrylate monomers.

In one preferred embodiment the (meth)acrylic silyl ester copolymers comprise 100 wt% of structural units derived from (meth)acrylate monomers, i.e. they do not comprise any monomers of another type.

The coating composition of the present invention may comprise a mixture of two or more different (meth)acrylic silyl ester copolymers (i) for example as described in GB2576431.

The (meth)acrylic silyl ester copolymer of the present invention preferably comprises structural units derived from a (meth)acrylic silyl ester monomer (a1) and structural units derived from polymerizable ethylenically unsaturated monomers (a2).

### (Meth)acrylic silyl ester monomer (a1)

Preferably the (meth)acrylic silyl ester copolymer (i) comprises the residue of at least one silyl ester monomer (a1) of formula (I): 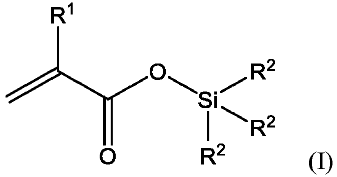 wherein
R¹ is H or CH₃;
R² is each independently selected from C1-C10 hydrocarbyl groups and OSi(R³)₃ groups;
wherein R³ is each independently selected from the group consisting of linear or branched C1-C10 alkyl groups.

The term "hydrocarbyl" is intended to cover linear or branched alkyl groups such as methyl, isopropyl, propyl, butyl, iso-butyl, tert-butyl, 1,1,2-trimethylpropyl and 2-ethylhexyl, cycloalkyl groups such as cyclohexyl and substituted cyclohexyl and aryl groups such as phenyl and substituted phenyl. It is preferred if each R² is independently a C1-8 alkyl group. It is preferred if all R² groups are the same.

It is preferred if each R³ is independently a C1-4 alkyl group. It is preferred if all R³ groups are the same.

Monomers (a1) as defined by the general formula (I) include silyl ester monomers such as tri-n-propylsilyl (meth)acrylate, triisopropylsilyl (meth)acrylate, tri-n-butylsilyl (meth)acrylate, triisobutyl silyl (meth)acrylate, tri-2-ethylhexylsilyl (meth)acrylate, tert-butyldimethylsilyl (meth)acrylate, thexyldimethylsilyl (meth)acrylate, tert-butyldiphenylsilyl (meth)acrylate, bis(trimethylsiloxy)methylsilyl (methacrylate) and tris(trimethylsiloxy)silyl (meth)acrylate.

The use of triisopropylsilyl acrylate and/or triisopropylsilyl methacrylate is preferred. R² therefore is preferably isopropyl.

The silyl ester monomer of formula (I) can be used alone, or two or more silyl ester monomers of formula (I) can be used in combination. The (meth)acrylic silyl ester copolymer (i) preferably comprises 1 or 2 different monomers of formula (I), especially one.

The (meth)acrylic silyl ester copolymer (i) preferably comprises at least 15 wt% silyl ester monomers, relative to the total weight of monomers present in the copolymer, e.g. those of formula (I) herein. Preferably, the (meth)acrylic silyl ester copolymer comprises at least 30 wt% silyl ester monomers, relative to the total weight of monomers present in the copolymer, more preferably at least 40 wt%, such as at least 45 wt%.

The (meth)acrylic silyl ester copolymer (i) preferably comprises less than 80 wt% silyl ester monomers, relative to the total weight of monomers present in the copolymer. Preferably, the (meth)acrylic silyl ester copolymer comprises less than 75 wt% silyl ester monomers, relative to the total weight of monomers present in the copolymer, more preferably less than 70 wt%, such as less than 65 wt%.

### Ethylenically unsaturated monomer (a2)

The (meth)acrylic silyl ester copolymer (i) of the present invention preferably comprises the residue of at least one ethylenically unsaturated monomer (a2) that will polymerize with the (meth)acrylic silyl ester monomer (a1). Monomers (a1) and (a2) are different. Monomer (a2) is preferably free of silyl ester groups. Monomer (a2) is preferably free of metal ester groups.

The ethylenically unsaturated monomer (a2) is preferably selected from (meth)acrylate monomers and vinyl monomers. Preferably the ethylenically unsaturated monomer (a2) is a (meth)acrylate monomer.

Examples of suitable (meth)acrylate monomers (a2) include methyl (meth)acrylate, ethyl (meth)acrylate, n-butyl (meth)acrylate, isobutyl (meth)acrylate, tert-butyl (meth)acrylate, 2-ethylhexyl (meth)acrylate, 2-octyl (meth)acrylate, isooctyl (meth)acrylate, 2-propylheptyl (meth)acrylate, isodecyl (meth)acrylate, cyclohexyl (meth)acrylate, 3,5,5-trimethylcyclohexyl (meth)acrylate, isobornyl (meth)acrylate, benzyl (meth)acrylate, 2-hydroxyethyl (meth)acrylate, 2-methoxyethyl (meth)acrylate, 2-ethoxyethyl (meth)acrylate, 2-butoxyethyl (meth)acrylate, 2-(2-ethoxyethoxy)ethyl (meth)acrylate, tetrahydrofurfuryl (meth)acrylate, glycerolformal (meth)acrylate, isopropylideneglycerol (meth)acrylate, glycerolcarbonate (meth)acrylate, cyclic trimethylolpropane formal (meth)acrylate, glycidyl (meth)acrylate and 4-glycidyloxybutyl (meth)acrylate;

Examples of suitable vinyl monomers (a2) are styrene, vinyl 2-ethylhexanoate and vinyl neodecanoate. Mixtures of different monomers (a2) may be used.

Preferably the ethylenically unsaturated monomer (a2) is of formula (II) 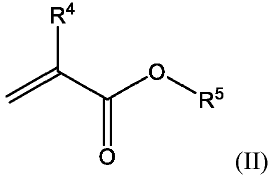 wherein R⁴ is H or CH₃, and R⁵ is a C1-C20 hydrocarbyl substituent,
preferably a C1-C10 alkyl substituent, such as a C1-C8 alkyl. The R⁵ group can be linear or branched. Most preferably R⁵ is a methyl, ethyl, propyl, butyl, hexyl, octyl or decyl group which (if possible) may be linear or branched. Ideally options for R⁵ are methyl, ethyl, n-butyl, isobutyl or isooctyl.

Examples of suitable monomers of formula (II) as monomer (a2) in (meth)acrylic polymer (ii-a) include methyl (meth)acrylate, ethyl (meth)acrylate, n-butyl (meth)acrylate, isobutyl (meth)acrylate, tert-butyl (meth)acrylate, 2-ethylhexyl (meth)acrylate, 2-octyl (meth)acrylate, isooctyl (meth)acrylate, 2-propylheptyl (meth)acrylate, isodecyl (meth)acrylate, cyclohexyl (meth)acrylate, 3,5,5-trimethylcyclohexyl (meth)acrylate, and isobornyl (meth)acrylate.

Preferred options for monomers of formula (II) include methyl methacrylate, ethyl acrylate, n-butyl acrylate, n-butyl methacrylate or isobutyl methacrylate.

Mixtures of different monomers of formula (II) may be used.

The ethylenically unsaturated monomer (a2) may also be of formula (III) 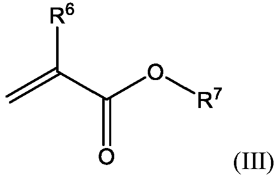 wherein R⁶ is H or CH₃, and R⁷ is a C3-C20 substituent containing at least one oxygen or nitrogen atom, preferably at least one oxygen, preferably a C3-C10 substituent containing at least one oxygen.

Preferably the R⁷ group is of formula (CH₂CH₂O)ₙ-R⁸ where R⁸ is a C1-C10 hydrocarbyl substituent, preferably a C1-C10 alkyl or C6-C10 aryl substituent, and n is an integer in the range of 1 to 5, preferably 1 to 3. Preferably R⁷ is of formula (CH₂CH₂O)ₙ-R⁸ where R⁸ is a C1-C10 alkyl substituent, preferably CH₃ or CH₂CH₃, and n is an integer in the range of 1 to 3, preferably 1 or 2.

Such a monomer might be 2-methoxyethyl (meth)acrylate, 2-ethoxyethyl (meth)acrylate, 2-butoxyethyl (meth)acrylate, 2-(2-methoxyethoxy)ethyl (meth)acrylate, 2-(2-ethoxyethoxy)ethyl (meth)acrylate, 2-(2-butoxyethoxy)ethyl (meth)acrylate, 2-[2-(2-methoxyethoxy)ethoxy]ethyl (meth)acrylate or 2-[2-(2-ethoxyethoxy)ethoxy]ethyl (meth)acrylate.

Preferred monomers (a2) of formula (III) are 2-methoxyethyl acrylate, 2-methoxyethyl methacrylate, 2-ethoxyethyl methacrylate, 2-(2-ethoxyethoxy)ethyl acrylate or 2-(2-ethoxyethoxy)ethyl methacrylate.

The R⁷ group may also be a cyclic group containing at least one oxygen or nitrogen atom, preferably at least one oxygen atom. In this embodiment, R⁷ may be a group W-R¹⁰ wherein R¹⁰ is a cyclic ether, such as oxirane, furan, oxolane, oxane, dioxolane, dioxane optionally alkyl substituted, and W is a C1-C4 alkylene.

Such a monomer of formula (III) might be furfuryl (meth)acrylate, tetrahydrofurfuryl (meth)acrylate, glycerol formal (meth)acrylate, isopropylideneglycerol (meth)acrylate, glycerol carbonate (meth)acrylate, cyclic trimethylolpropane formal (meth)acrylate, glycidyl (meth)acrylate and 4-glycidyloxybutyl (meth)acrylate. Preferred cyclic ethers should contain at least 4 atoms in the ring such as tetrahydrofurfuryl acrylate and isopropylideneglycerol methacrylate.

The monomer of formula (III) is preferably 2-methoxyethyl acrylate, 2-methoxyethyl methacrylate, 2-ethoxyethyl methacrylate, 2-(2-ethoxyethoxy)ethyl acrylate, 2-(2-ethoxyethoxy)ethyl methacrylate or tetrahydrofurfuryl acrylate, more preferred 2-methoxyethyl acrylate, 2-methoxyethyl methacrylate, 2-(2-ethoxyethoxy)ethyl acrylate or tetrahydrofurfuryl acrylate.

Mixtures of different monomers of formula (III) may be used.

Mixtures of different monomers of formula (II) and formula (III) may also be used together.

If monomer of formula (III) is present in the (meth)acrylic silyl ester copolymer (i) of the present invention it is preferred if at least one monomer of formula (II) is also present.

Preferred (meth)acrylic silyl ester copolymers (i) of the present invention comprise structural units derived from one or more monomers of formula (I), such as triisopropylsilyl acrylate and/or triisopropylsilyl methacrylate and structural units derived from one or more monomers of formula (II) such as methyl methacrylate and/or butyl acrylate and structural units derived from one or more monomers of formula (III) such as 2-methoxyethyl acrylate, 2-methoxyethyl methacrylate and 2-(2-ethoxyethoxy)ethyl acrylate.

Preferably, the content of the silyl ester monomer(s) (a1) (such as monomers of formula (I)) in the (meth)acrylic silyl ester copolymer (i) is in the range 30 to 80 wt%, preferably 35 to 75 wt%, such as 40 to 70 wt% and 45 to 65 wt%, relative to the total weight of monomers present in the (meth)acrylic silyl ester copolymer as a whole.

Preferably, the (meth)acrylic silyl ester copolymer (i) comprises 20 to 70 wt% of the monomer(s) (a2) (such as those of formula (II) or formula (III)), such as 30 to 60 wt% and 35 to 55 wt%, relative to the total weight of monomers present in the (meth)acrylic silyl ester copolymer as a whole, more preferably 35 to 55 wt%.

Preferably, the (meth)acrylic silyl ester copolymer (i) comprises at least 15 wt% of the monomer(s) of formula (II) component, especially 15 to 65 wt%.

Preferably, the (meth)acrylic silyl ester copolymer (i) comprises less than 50 wt% of the monomer(s) of formula (III), more preferred 2.0 to 35 wt%.

When the R⁷ group in formula (III) is a group of formula (CH₂CH₂O)ₙ-R⁸ the (meth)acrylic silyl ester copolymer (i) may comprise 2.0 to 40 wt% of the monomer(s) of formula (III).

When the R⁷ group in formula (III) is a cyclic group the (meth)acrylic silyl ester copolymer (i) may comprise 5.0 to 50 wt% of the monomer(s) of formula (III).

The (meth)acrylic silyl ester copolymer (i) preferably has a weight-average molecular weight (Mw) from 5,000 to 70,000, preferably from 8,000 to 55,000, more preferably from 20,000 to 45,000. Mw is determined as described in the examples section. The (meth)acrylic silyl ester copolymer (i) preferably has a polydispersity index (PDI) of from 1.5 to 8.0, more preferred from 2.0 to 5.0.

The copolymer preferably has a glass transition temperature (Tg) of at least 15 °C, preferably at least 20 °C, such as at least 25 °C, all values being measured according to the Tg test described in the examples section. Values less than 80 °C are preferred, such as less than 70 °C, e.g. less than 60 °C or less than 55 °C.

The silyl ester copolymer may be provided as a polymer solution, such as a xylene solution. The polymer solution is desirably regulated to have a solid content from 30 to 90 % by weight, preferably from 40 to 85 % by weight, more preferably from 45 to 75 % by weight.

In one preferred embodiment the antifouling coating composition of the invention preferably comprises 2.0 to 30 wt% of the (meth)acrylic silyl ester copolymer (i), such as 5.0 to 25 wt%, in particular 7.0 to 20 wt% or 7.0 to 15 wt% based on the total coating composition.

In one preferred embodiment the antifouling coating composition of the invention preferably comprises 5.0 to 40 wt% of the (meth)acrylic silyl ester copolymer (i), such as 7.0 to 30 wt%, in particular 10 to 25 wt% or 10 to 20 wt% based on the total dry weight of the coating composition.

In one preferred embodiment the amount of the (meth)acrylic silyl ester copolymer (i) is present in the antifouling coating compositions of the invention in 20 to 70 wt%, preferably 30 to 65 wt%, more preferably 40 to 60 wt%, based on the total dry weight of binders in the coating composition.

If the antifouling coating composition comprises a mixture of two or more different (meth)acrylic silyl ester copolymers (i) then these percentages apply to the content of all (meth)acrylic silyl ester copolymers (i) present. It is preferred if only one (meth)acrylic silyl ester copolymer (i) is present.

### (Meth)acrylic copolymer (v)

The (meth)acrylic copolymer (v) of the present invention comprises structural units derived from carboxylic acid containing (meth)acrylic monomers (a3) and (meth)acrylate monomers of formula (II).

The carboxylic acid containing monomer (a3) content within the (meth)acrylic copolymer (v) is in the range of 0.5 to 10 wt%, such as 1.0 to 5.0 wt%.

Suitable (meth)acrylic acid monomers (a3) are methacrylic acid and acrylic acid.

Preferably the (meth)acrylic copolymer (v) has acid number below 60 mg KOH/g polymer, more preferred below 40 mg KOH/g polymer, even more preferred below 25 mg KOH/g polymer. Preferably the acid number is above 2 mg KOH/g polymer, such as above 5 mg KOH/g polymer. The acid number is determined according to the procedure described in ISO 2114:2000 Method A.

The (meth)acrylic copolymer (v) also contains at least one (meth)acrylate monomer of formula (II) 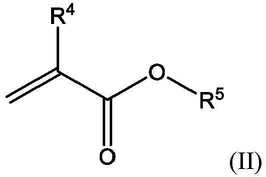 wherein R⁴ is H or CH₃, and R⁵ is a C1-C20 hydrocarbyl substituent, such as a C1-C10 alkyl substituent, preferably a C1-C8 alkyl substituent.

The R⁵ group can be linear or branched. Most preferably R⁵ is a methyl, ethyl, propyl, butyl, hexyl, or octyl group which (if possible) may be linear or branched. Preferences for formula (II) above described in connection with the (meth)acrylic silyl ester copolymer (i) also apply to (meth)acrylic copolymer (v).

Examples of suitable monomers of formula (II) in (meth)acrylic copolymer (v) include methyl (meth)acrylate, ethyl (meth)acrylate, n-butyl (meth)acrylate, isobutyl (meth)acrylate, tert-butyl (meth)acrylate, 2-ethylhexyl (meth)acrylate, 2-octyl (meth)acrylate, isooctyl (meth)acrylate, 2-propylheptyl (meth)acrylate, isodecyl (meth)acrylate and cyclohexyl (meth)acrylate.

Preferred options for monomers of formula (II) in (meth)acrylic copolymer (v) include methyl methacrylate, ethyl acrylate, n-butyl acrylate, n-butyl methacrylate, 2-ethylhexyl acrylate, 2-octyl acrylate, isooctyl acrylate or isodecyl acrylate.

Mixtures of different monomers of formula (II) may also be used in (meth)acrylic copolymer (v).

In one preferred embodiment the (meth)acrylic copolymer (v) comprises structural units derived from acrylic acid and/or methacrylic acid and methyl methacrylate, ethyl acrylate, n-butyl acrylate, n-butyl methacrylate, 2-ethylhexyl acrylate, 2-octyl acrylate, isooctyl acrylate and/or isodecyl acrylate.

The (meth)acrylic copolymer (v) comprises at least 80 wt% of the repeating units derived from (meth)acrylate monomers of formula (II), i.e. acrylate and/or methacrylate monomers.

It is further preferred if the (meth)acrylic copolymer (v) comprises at least 85 wt%, more preferably at least 90 wt% and still more preferably at least 95 wt% repeating units derived from (meth)acrylate monomers of formula (II).

The (meth)acrylic copolymer (v) of the invention comprises 10 wt% or less silyl ester monomers, e.g. those of formula (I) above, preferably less than 5.0 wt%, such as less than 2.0 wt% or less than 1.0 wt%, and 5.0 wt% or less of metal ester monomers, preferably less than 3.0 wt% such as such as less than 2.0 wt% or less than 1.0 wt%, relative to the total weight of monomers present in the (meth)acrylic copolymer (v). Most preferred the (meth)acrylic copolymer (v) is free of any monomers comprising silyl ester groups.

It is also preferred if the (meth)acrylic copolymer (v) of the invention is free of any monomers comprising metal ester groups.

The (meth)acrylic copolymer (v) may also comprise structural units derived from other ethylenically unsaturated monomers such as vinyl monomers, e.g. styrene, vinyl 2-ethylhexanoate and vinyl neodecanoate. Preferably, the only monomers present are of formula (II) and (meth)acrylic acid.

The (meth)acrylic copolymer (v) may be provided as a polymer solution, such as a solution in solvents. The polymer solution is desirably regulated to have a solid content from 30 to 90 % by weight, preferably from 40 to 85 % by weight, more preferably from 45 to 75 % by weight.

The (meth)acrylic copolymer (v) has a Tg below 10.0 °C, preferably below 0 °C, more preferred below -5 °C, even more preferred below -10 °C, all values being measured according to the Tg test described in the examples section. Values more than -65 °C are preferred, e.g. more than -55 °C or more than -45 °C.

The (meth)acrylic copolymer (v) preferably has a weight-average molecular weight of from 5,000 to 100,000, preferably of from 10,000 to 80,000, especially 15,000 to 50,000. Mw is determined as described in the examples section. The (meth)acrylic copolymer (v) preferably has a polydispersity index (PDI) of from 1.5 to 5.0.

The (meth)acrylic copolymer (v) is typically present in an amount of 0.5 to 10 wt%, preferably 1.0 to 5.0 wt%, relative to the total weight of the coating composition as a whole when a (meth)acrylic silyl ester copolymer (i) is used.

The (meth)acrylic copolymer (v) is typically present in an amount of 1.0 to 12 wt%, preferably 2.0 to 7.0 wt%, relative to the total dry weight of the coating composition as a whole when a (meth)acrylic silyl ester copolymer (i) is used.

When the (meth)acrylic copolymer (v) is used in the absence of the (meth)acrylic silyl ester copolymer (i) it may be present in an amount of 1.0 to 12 wt%, preferably 2.0 to 7.0 wt%, relative to the total weight of the coating composition as a whole.

When the (meth)acrylic copolymer (v) is used in the absence of the (meth)acrylic silyl ester copolymer (i) it may be present in an amount of 1.5 to 15 wt%, preferably 2.5 to 10 wt%, relative to the total dry weight of the coating composition as a whole.

The (meth)acrylic copolymer (v) is typically present in the antifouling coating compositions of the invention in an amount 2.0 to 25 wt%, preferably 5.0 to 20 wt%, based on the total dry weight of binders in the coating composition when the (meth)acrylic silyl ester copolymer (i) is present.

The (meth)acrylic copolymer (v) is typically present in the antifouling coating compositions of the invention in an amount 5.0 to 30 wt%, preferably 10 to 25 wt% based on the total dry weight of binders in the coating composition when the (meth)acrylic silyl ester copolymer (i) is absent.

If the antifouling coating composition comprises a mixture of two or more different (meth)acrylic copolymer (v) then these percentages apply to the content of all (meth)acrylic copolymer (v) present. It is preferred if only one (meth)acrylic copolymer (v) is present.

### (Meth)acrylic copolymer (ii)

In one embodiment the coating composition of the present invention may comprise a (meth)acrylic copolymer (ii). This is different from polymer (i) and polymer (v). It is preferred if (meth)acrylic copolymer (ii) is used together with (meth)acrylic copolymer (v).

The (meth)acrylic copolymer (ii) has a glass transition temperature (Tg) of at least 10 °C, preferably at least 15 °C, such as at least 17 °C or at least 20 °C, all values being measured according to the Tg test described in the examples section. Values less than 80 °C are preferred, such as less than 70 °C, e.g. less than 55 °C. The Tg of (meth)acrylic copolymer (ii) is therefore at least 10 °C whereas that of (meth)acrylic copolymer (v) is less than 10 °C. Preferably, the Tg of (meth)acrylic copolymer (ii) is at least 10 °C whereas that of (meth)acrylic copolymer (v) is 0 °C or less.

The (meth)acrylic copolymer (ii) comprises at least 80 wt% of the repeating units derived from (meth)acrylate monomers, i.e. acrylate and/or methacrylate monomers.

It is further preferred if the (meth)acrylic copolymer (ii) comprises at least 85 wt%, more preferably at least 90 wt% and still more preferably at least 95 wt% repeating units derived from (meth)acrylate monomers.

In one embodiment the (meth)acrylic copolymer (ii) does not contain a carboxylic acid containing monomer such as a (meth)acrylic acid monomer (a3).

The (meth)acrylic copolymer (ii) comprises at least one (meth)acrylate monomer (a5).

Examples of suitable (meth)acrylate monomers (a5) include methyl (meth)acrylate, ethyl (meth)acrylate, n-butyl (meth)acrylate, isobutyl (meth)acrylate, tert-butyl (meth)acrylate, 2-ethylhexyl (meth)acrylate, isooctyl (meth)acrylate, 2-propylheptyl (meth)acrylate, isodecyl (meth)acrylate, cyclohexyl (meth)acrylate, 3,5,5-trimethylcyclohexyl (meth)acrylate, isobornyl (meth)acrylate, benzyl (meth)acrylate, 2-hydroxyethyl (meth)acrylate, oligo(ethylene glycol) (meth)acrylate, poly(ethylene glycol) (meth)acrylate, 2-methoxyethyl (meth)acrylate, 2-ethoxyethyl (meth)acrylate, 2-butoxyethyl (meth)acrylate, 2-(2-ethoxyethoxy)ethyl (meth)acrylate, oligo(ethylene glycol) methyl ether (meth)acrylate, poly(ethylene glycol) methyl ether (meth)acrylate, tetrahydrofurfuryl (meth)acrylate, glycerolformal (meth)acrylate, isopropylideneglycerol (meth)acrylate, glycerolcarbonate (meth)acrylate, cyclic trimethylolpropane formal (meth)acrylate, glycidyl (meth)acrylate and 4-glycidyloxybutyl (meth)acrylate;

More preferred examples of (meth)acrylate monomers (a5) are of formula (II) as hereinbefore defined for the (meth)acrylic silyl ester copolymer (i).

Preferred options for monomers of formula (II) as monomer (a5) include methyl methacrylate, n-butyl acrylate, n-butyl methacrylate and isobutyl methacrylate.

Mixtures of different monomers of (a5) may also be used.

The (meth)acrylate monomers (a5) may also comprise hydrophilic groups. Examples of suitable monomers are shown in formula VI below: 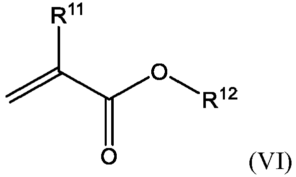 wherein R¹¹ is H or CH₃, and R¹² is a C3-C20 substituent, such as C3-C10 substituent, containing at least one oxygen or nitrogen atom, preferably at least one oxygen atom or R¹² represents a poly(alkylene glycol) group.

The (meth)acrylic polymer (ii) may comprise at least one monomer of formula (VI) above in which the R¹² group is of formula (CH₂CH₂O)ₙ-R¹³ where R¹³ is a C1-C10 hydrocarbyl substituent, preferably a C1-C10 alkyl or C6-C10 aryl substituent, and n is an integer in the range of 1 to 5, preferably 1 to 3. Preferably R¹² is of formula (CH₂CH₂O)ₙ-R¹³ where R¹³ is a C1-C10 alkyl substituent, preferably CH₃ or CH₂CH₃, and n is an integer in the range of 1 to 3, preferably 1 or 2.

Such a monomer might be 2-methoxyethyl (meth)acrylate, 2-ethoxyethyl (meth)acrylate, 2-butoxyethyl (meth)acrylate, 2-(2-methoxyethoxy)ethyl (meth)acrylate, 2-(2-ethoxyethoxy)ethyl (meth)acrylate, 2-(2-butoxyethoxy)ethyl (meth)acrylate, 2-[2-(2-methoxyethoxy)ethoxy]ethyl (meth)acrylate or 2-[2-(2-ethoxyethoxy)ethoxy]ethyl (meth)acrylate.

Preferably the (meth)acrylic copolymer (ii) comprises 2-methoxyethyl acrylate or 2-(2-ethoxyethoxy)ethyl acrylate.

The (meth)acrylic copolymer (ii) may comprise at least one monomer of formula (VI) above in which the R¹² group is a poly(alkylene glycol) group such as a poly(ethylene glycol) group. Such a group might have a formula (CH₂CH₂O)ₘ-R¹³ or (CH₂CH(CH₃)O)ₘ-R¹⁴ where R¹⁴ is a C1-C10 hydrocarbyl substituent, preferably a C1-C10 alkyl or C6-C10 aryl substituent, and m is an integer in the range of 5 to 25, preferably 5 to 15. Such a monomer might be poly(ethylene glycol) methyl ether acrylate, poly(ethylene glycol) ethyl ether acrylate, poly(ethylene glycol) methyl ether methacrylate, poly(ethylene glycol) ethyl ether methacrylate. Preferred such a monomer have a number-average molecular weight (Mn) of 300-1000, more preferably 300-550.

The (meth)acrylic copolymer (ii) may comprise at least one monomer of formula (VI) above in which the R¹² group is a cyclic group containing at least one oxygen or nitrogen atom, preferably at least one oxygen atom. More preferably, R¹² is a group W-R¹⁶ wherein R¹⁶ is a cyclic ether, such as oxirane, furan, oxolane, oxane, dioxolane, dioxane optionally alkyl substituted, and W is a C1-C4 alkylene.

Such a monomer might be furfuryl (meth)acrylate, tetrahydrofurfuryl (meth)acrylate, glycerol formal (meth)acrylate, isopropylideneglycerol (meth)acrylate, glycerol carbonate (meth)acrylate, cyclic trimethylolpropane formal (meth)acrylate, glycidyl (meth)acrylate and 4-glycidyloxybutyl (meth)acrylate. Preferred cyclic ethers should contain at least 4 atoms in the ring. More preferably tetrahydrofurfuryl acrylate and isopropylideneglycerol methacrylate.

The monomer of formula (VI) is preferably 2-methoxyethyl acrylate, 2-(2-ethoxyethoxy)ethyl acrylate or poly(ethylene glycol) methyl ether methacrylate.

Monomers of formula (VI) preferably form at least 10 wt% of the (meth)acrylic copolymer (ii). Particularly preferred amounts of the monomer of formula (VI) in the copolymer (ii) are 10 to 65 wt%, preferably 15 to 60 wt%, such as 18 to 50 wt%. Where a mixture of monomers of formula (VI) are present, these amounts relate to the combined weight fraction of the monomers of formula (VI) in the copolymer.

In one preferred embodiment the (meth)acrylic copolymer (ii) comprises at least one monomer of formula (II) and at least one monomer of formula (VI).

In a preferred embodiment, the (meth)acrylic copolymer component (ii) consists of monomers of formula (II) and formula (VI) only. The (meth)acrylic copolymer (ii) preferably does not contain a carboxylic acid containing monomer (a3).

The (meth)acrylic copolymer (ii) may also comprise structural units derived from other ethylenically unsaturated monomers such as vinyl monomers vinyl monomers, e.g. styrene, vinyl 2-ethylhexanoate, vinyl neodecanoate and *N-*vinylpyrrolidone.

The (meth)acrylic copolymer (ii) preferably has a weight-average molecular weight (Mw) of from 10,000 to 100,000, preferably of from 15,000 to 70,000, especially 20,000 to 50,000. Mw is determined as described in the examples section. The (meth)acrylic copolymer (ii) preferably has a polydispersity index (PDI) of from 1.5 to 5.0.

When the (meth)acrylic copolymer (ii) is used it may be present in an amount of 1.0 to 15 wt%, preferably 2.0 to 12 wt%, relative to the total weight of the coating composition as a whole.

When the (meth)acrylic copolymer (ii) is used it may be present in an amount of 1.5 to 20 wt%, preferably 2.5 to 15 wt%, relative to the total dry weight of the coating composition as a whole.

When the (meth)acrylic copolymer (ii) is used in the antifouling coating compositions of the invention it may be present in the in an amount 5.0 to 40 wt%, preferably 10 to 35 wt%, based on the total dry weight of binders in the coating composition.

If the antifouling coating composition comprises a mixture of two or more different (meth)acrylic copolymers (ii) then these percentages apply to the content of all (meth)acrylic copolymers (ii) present. It is preferred if only one (meth)acrylic copolymer (ii) is present (if at all).

### Preparation of (meth)acrylic silyl ester copolymer (i) and (meth)acrylic copolymers (ii) and (v)

The (meth)acrylic silyl ester copolymer (i), (meth)acrylic copolymer (ii) and (meth)acrylic copolymer (v) can be prepared using polymerization reactions known in the art. The polymers can be obtained by polymerizing a monomer mixture in the presence of a polymerization initiator by any of various methods such as solution polymerization, bulk polymerization, emulsion polymerization, dispersion polymerization and suspension polymerization in a conventional way, such as free-radical polymerization, or by controlled polymerization techniques. In the case of copolymers, the final polymer may be a random copolymer, an alternate copolymer, a gradient copolymer or a block copolymer.

In preparing a coating composition using any of the polymers, the polymer is preferably diluted with an organic solvent to give a polymer solution having an appropriate viscosity. From this standpoint, it is desirable to employ solution polymerization.

Examples of suitable initiators for free-radical polymerization in solvents include azo compounds such as dimethyl 2,2'-azobis(2-methylpropionate), 2,2'-azobis(2-methylbutyronitrile), 2,2'-azobis(isobutyronitrile) and 1,1'-azobis(cyanocyclohexane); and peroxides such as tert-amyl peroxypivalate, *tert-*butyl peroxypivalate *tert*-amyl peroxy-2-ethylhexanoate, *tert*-butyl peroxy-2-ethylhexanoate, 1,1,3,3-tetramethylbutyl peroxy-2-ethylhexanoate, *tert*-butyl peroxydiethylacetate, *tert*-butyl peroxyisobutyrate, *tert*-butyl peroxybenozate, 1,1-di(tert-amyl peroxy)cyclohexane, *tert*-amylperoxy 2-ethylhexyl carbonate, *tert-*butylperoxy isopropyl carbonate, *tert*-butylperoxy 2-ethylhexyl carbonate, polyether poly-tert-butylperoxy carbonate, di-*tert*-butyl peroxide and dibenzoyl peroxide. These compounds are used alone or as a mixture of two or more thereof.

Examples of the organic solvent include aromatic hydrocarbons such as xylene, toluene, mesitylene; ketones such as methyl ethyl ketone, methyl isobutyl ketone, methyl amyl ketone, methyl isoamyl ketone, diisobutyl ketone, cyclopentanone, cyclohexanone; esters such as butyl acetate, *tert*-butyl acetate, amyl acetate, propyl propionate, n-butyl propionate, isobutyl isobutyrate, ethylene glycol methyl ether acetate; ethers such as ethylene glycol dimethyl ether, diethylene glycol dimethyl ether, dibutyl ether, dioxane, tetrahydrofuran, alcohols such as n-butanol, isobutanol, methyl isobutyl carbinol, benzyl alcohol; ether alcohols such as butoxyethanol, 1-methoxy-2-propanol; aliphatic hydrocarbons such as white spirit, limonene. These solvents are used alone or as a mixture of two or more thereof.

### Rosin, modified rosin and metal salts thereof (iii)

The antifouling coating compositions of the present invention comprise a rosin, modified rosin or metal salts of rosin or a modified rosin. It is possible to use a mixture of rosins, modified rosins and metal salts thereof.

Representative examples of rosins include gum rosin, wood rosin and tall oil rosin. Gum rosin, also referred to as colophony and colophonium, is particularly preferred. Preferred rosins are those comprising more than 85 % rosin acids and still more preferably more than 90 % rosin acids. Rosin acids is also referred to as resin acids.

Commercial grades of gum rosin typically have an acid value from 155 to 180 mg KOH/g as specified in ASTM D465. Preferred rosin for the compositions of the invention has an acid value from 155 to 180 mg KOH/g, more preferred 160 to 175 mg KOH/g, even more preferred 160 to 170 mg KOH/g. Commercial grades of rosin typically have a softening point (Ring & Ball) of 70 °C to 80 °C as specified in ASTM E28. Preferred rosin for the compositions of the invention has a softening point of 70 °C to 80 °C, more preferred 75 °C to 80 °C.

Modified rosins include partly hydrogenated rosin, fully hydrogenated rosin and disproportionated rosin. It should be understood that modified rosin within the present invention comprises a carboxylic acid group.

Metal salts of rosin and metal salts of modified rosin comprises a metal such as zinc, copper, calcium and magnesium, zinc and copper is preferred.

Further preferred the antifouling coating composition of the invention comprises gum rosin, hydrogenated gum rosin, copper salt of gum rosin or hydrogenated rosin, zinc salt of gum rosin or hydrogenated rosin and mixtures thereof. More preferred the antifouling coating composition of the invention comprises gum rosin, hydrogenated gum rosin, copper salt of gum rosin, zinc salt of gum rosin and mixtures thereof. Gum rosin is most preferred.

The final antifouling coating composition of the invention preferably comprises 5.0 to 30 wt% of the rosin or modified rosin or metal salts thereof, such as 5.0 to 25 wt% or 10 to 25 wt% based on the total coating composition.

The final coating composition of the invention preferably comprises 7.0 to 40 wt% of the rosin, modified rosin or metal salts thereof based on the total dry weight of the coating composition, preferably 12 to 32 wt%.

The antifouling coating composition of the invention preferably comprises (iii) 25 to 65 wt%, preferably 35 to 60 wt%, more preferably 40 to 60 wt% rosin, modified rosin or metal salts thereof based on the total dry weight of binders in the coating composition.

If a mixture of rosins, modified rosins or metal salts thereof are used then these percentages refer to all rosins, modified rosins and metal salts thereof combined.

Components (i) to (iii) and (v) make up the binder in the final coating composition of the invention if present. The wt% of binder, in particular the weight percent of components (i) to (iii) and (v) combined, in the final coating composition is 15 to 50 wt%, preferably 20 to 35 wt% of the total coating composition.

The wt% of binder, in particular the weight percent of components (i) to (iii) and (v) combined, in the final coating composition is 20 to 65 wt%, preferably 25 to 45 wt% of the total dry weight of the coating composition.

### Other binder components

In addition to components (i), (ii), (iii) and (v) described above, an additional binder can be used to adjust the properties of the antifouling coating composition. Examples of binders that can be used include:
hydrophilic copolymers, such as poly(*N*-vinyl pyrrolidone) copolymers and poly(ethylene glycol) copolymers; vinyl ether polymers and copolymers, such as poly(methyl vinyl ether), poly(ethyl vinyl ether), poly(isobutyl vinyl ether), poly(vinyl chloride-*co*-isobutyl vinyl ether);
metal containing (meth)acrylate copolymers, such as zinc (meth)acrylate copolymers and copper (meth)acrylate copolymers;
saturated aliphatic polyesters, such as poly(lactic acid), poly(glycolic acid), poly(2-hydroxybutyric acid), poly(3-hydroxybutyric acid), poly(4-hydroxyvaleric acid), polycaprolactone and aliphatic polyester copolymer containing two or more of the units selected from the above mentioned units; alkyd resins and modified alkyd resins;
hydrocarbon resin, such as hydrocarbon resin formed only from the polymerisation of at least one monomer selected from a C5 aliphatic monomer, a C9 aromatic monomer, an indene coumarone monomer, or a terpene or mixtures thereof;
liquid acyclic and/or branched C10-C24 monocarboxylic acids, such as neodecanoic acid, 2,2,3,5-tetramethylhexanoic acid, 2,4-dimethyl-2-isopropylpentanoic acid, 2,5-dimethyl-2-ethylhexanoic acid, 2,2-dimethyloctanoic acid, 2,2-diethylhexanoic acid, pivalic acid, 2,2-dimethylpropionic acid, trimethylacetic acid, neopentanoic acid, 2-ethylhexanoic acid, isononanoic acid, 3,5,5-trimethylhexanoic acid, isopalmitic acid, isostearic acid, 16-methylheptadecanoic acid, 12,15-dimethylhexadecanoic acid and mixture thereof;
plasticizers, such as polymeric plasticizers, non-reactive silicone oils, mineral oils, chlorinated paraffins, phthalates, phosphate esters, sulphonamides, adipates, epoxidized vegetable oils, methyl ester of rosin, methyl ester of branched fatty acids and sucrose acetate isobutyrate.

In one particularly preferred embodiment of the invention, the coating composition does not comprise a plasticizer which is a paraffin, especially not a paraffin comprising aromatic groups.

Preferably further binders are present in the compositions of the invention in an amount of 0 to 10 wt%, more preferably 0.5 to 7.0 wt% and still more preferably 1.0 to 5.0 wt%, based on the total weight of the coating composition.

### Biocides (iv)

The antifouling coating composition additionally comprises biocides, i.e. compounds capable of reducing or preventing settlement and/or growth of marine fouling on a surface. The terms antifouling agent, antifoulant, biocide and toxicant are used in the industry to describe known compounds that act to prevent marine fouling on a surface. The antifouling agents of the invention are marine antifouling agents. These compounds are present in a total amount of 10.0 wt% or less, relative to the total weight of the coating composition as a whole. Preferably, the coating composition comprises 8.0 wt% or less of biocides, even more preferably 5.0 wt% or less. Example ranges for the amount of biocides include 0.5 to 10.0 wt%, 1.0 to 8.0 wt% and 1.0 to 5.0 wt%, relative to the total weight of the coating composition as a whole.

The biocides must comprise medetomidine (iv-a) and one or more copper compounds (iv-b) as defined below.

### Medetomidine (iv-a)

As discussed above, medetomidine (4-[1-(2,3-dimethylphenyl)ethyl]-1H-imidazole) having the structure below, must be present in the compositions of the invention:

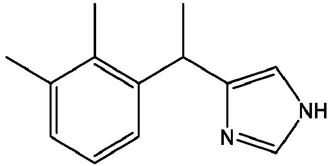

Example of commercially available medetomidine include Selektope^{®} from I-Tech.

In all embodiments, it is preferred if medetomidine is present in an amount of 0.05 to 1.0 wt%, relative to the total weight of the composition, preferably 0.05 to 0.7 wt%, more preferably 0.05 to 0.5 wt%, even more preferably 0.05 to 0.4 wt%, such as 0.1 to 0.3 wt%.

In all embodiments, it is preferred if medetomidine is present in an amount of 0.05 to 1.5 wt%, relative to the total dry weight of the coating composition, preferably 0.07 to 1.0 wt%, more preferably 0.10 to 0.7 wt%, even more preferably 0.15 to 0.5 wt%.

### Copper compound (iv-b)

The copper compound may be any suitable copper antifouling compound having a copper content of at least 40 wt%, relative to the total weight of the copper compound. Preferably, the copper compound has a copper content of at least 40 wt%, at least 50 wt%, more preferred at least 55 wt%, most preferred at least 70 wt% relative to the total weight of the copper compound, such as at least 75 wt%. It will be understood that the copper content is calculated as the mass of copper atoms present in the chemical formula of the copper compound, excluding carrier materials.

In the table below is a list of commonly used copper compounds and the calculated copper content in the compounds:

| **Chemical name** | **Formula** | **FW** | **Copper (Cu) content, wt%** |
|---|---|---|---|
| Copper(I) oxide | Cu₂O | 143.09 | 89 |
| Copper(II) oxide | CuO | 79.55 | 80 |
| Copper(II) sulfide | CuS | 95.61 | 66 |
| Copper(I) thiocyanate | CuSCN | 121.63 | 52 |
| Copper(II) carbonate | CuCO₃ | 123.55 | 51 |
| Copper(II) acetate | Cu(C₂H₃O₂)₂ | 181.63 | 35 |
| Copper(II) acetylacetonate | Cu(C₅H₈O₂)₂ | 261.76 | 24 |
| Copper(II) pyrithione | Cu(C₅H₄NOS)₂ | 315.86 | 20 |
| Copper(II) 2-ethylhexanoate | Cu(C₈H₁₅O₂)₂ | 349.95 | 18 |

A single copper compound may be used, or alternatively a mixture of two or more copper compounds may be employed.

The copper compound may be present with carrier materials such as encapsulated copper compounds, copper glass, particles coated with copper compounds and porous particles with copper compounds. The wt% copper requirement refers to the amount of copper in the chemical copper compound and hence ignores the weight of any carrier.

Particularly preferred copper compounds are metallic copper, such as copper powder and copper flakes, copper(I) oxide, copper(II) sulfide and copper(I) thiocyanate. Copper(I) oxide is also referred to as cuprous oxide.

Preferably the copper compound is an inorganic copper compound such as metallic copper, copper(I) oxide and copper(II) sulfide, most preferred copper compounds are metallic copper powder and copper(I) oxide.

In one particularly preferred embodiment the copper compound is copper(I) oxide.

The copper(I) oxide material preferably has a typical particle diameter distribution of 0.1-70 µm and an average particle size (d50) of 1-25 µm. The copper(I) oxide material may contain a stabilizing agent to prevent surface oxidation and caking. Examples of commercially available copper(I) oxide include Nordox Cuprous Oxide Red Paint Grade, Nordox Cuprotech, Nordox XLT from Nordox AS, Cuprous oxide from Furukawa Chemicals Co., Ltd.; Red Copp 97N, Purple Copp, Lolo Tint 97N, Chemet CDC, Chemet LD from American Chemet Corporation; Cuprous Oxide Red from Spiess-Urania; Cuprous oxide Roast, Cuprous oxide Electrolytic from Taixing Smelting Plant Co., Ltd.

In all embodiments, it is preferred if the copper compound(s) is present in an amount of 0.1 to 8.0 wt%, relative to the total weight of the composition, preferably 0.2 to 5.0 wt%, more preferably 0.3 to 3.0 wt%.

If a blend of copper compounds is present then each may be present in an amount of 0.1 to 6.0 wt%, relative to the total weight of the composition, preferably 0.2 to 5.0 wt%, more preferably 0.3 to 3.0 wt%, even more preferably 0.3 to 2.0 wt%, further preferred 0.3 to 1.5 wt%.

It is to be understood that the total amount of biocides in the coating composition of the invention cannot exceed 10.0 wt%. Suitable amounts and number of copper compounds can be selected accordingly.

More preferably the coating composition of the invention comprises 8.0 wt% or less of biocides, relative to the total weight of the coating composition as a whole, preferably 5.0 wt% or less.

In all embodiments, it is preferred if the copper compound is present in an amount of 0.1 to 9.95 wt%, relative to the total dry weight of the coating composition, preferably 0.2 to 7.0 wt%, more preferably 0.3 to 4.0 wt%, even more preferably 0.3 to 2.5 wt%, further preferred 0.3 to 1.5 wt%. It is also preferred if the total amount of biocides in the total dry weight of the coating composition of the invention does not exceed 13.0 wt%.

In those embodiments wherein more than one copper compound of the invention is present, it will be understood that these wt% ranges apply to the total amount of all copper compounds present. Note that if a copper compound is present that does not have 40 wt% copper then it is not a copper compound of the invention.

### Other biocides

In addition to these biocides, other antifouling compounds can be present. The antifouling agent may be inorganic, organometallic or organic. Suitable antifouling agents are commercially available.

Examples of organometallic marine antifouling agents include zinc pyrithione, copper pyrithione, copper di(ethyl 4,4,4-trifluoroacetoacetate), zinc bis(dimethyldithiocarbamate) [ziram] and zinc ethylenebis(dithiocarbamate) [zineb] and copper and zinc compounds as described in WO2021113564A1. It should be noted that copper pyrithione and copper di(ethyl 4,4,4-trifluoroacetoacetate) have a copper content of less than 40 wt% based on formula weight and are therefore not included under the definition of a copper compound in the present invention.

Examples of organic marine antifouling agents include heterocyclic compounds such as 2-(*tert*-butylamino)-4-(cyclopropylamino)-6-(methylthio)-1,3,5-triazine [cybutryne], 4,5-dichloro-2-*n*-octyl-4-isothiazolin-3-one [DCOIT], 3-(3,4-dichlorophenyl)-1,1-dimethylurea [diuron] *N*-dichlorofluoromethylthio-*N'*,*N'-*dimethyl-*N*-phenylsulfamide [dichlofluanid], *N*-dichlorofluoromethylthio-*N*',*N*'-dimethyl-*N*-p-tolylsulfamide [tolylfluanid], *N* (2,4,6-trichlorophenyl)maleimide, triphenylborane pyridine [TPBP], 3-iodo-2-propynyl *N*-butylcarbamate [IPBC], 2,4,5,6-tetrachloroisophthalonitrile [chlorothalonil], *p-*((diiodomethyl)sulphonyl)toluene and 4-bromo-2-(4-chlorophenyl)-5-trifluoromethyl)-1H-pyrrol-3-carbonitrile [tralopyril].

Other examples of marine antifouling agents may be tetraalkylphosphonium halogenides, macrocyclic lactones including avermectins and derivatives thereof such as ivermectine; furanone and lactam compounds such as 4-(4-chlorophenyl)-5-hydroxy-5-methyl-2(5H)-furanone and 4-(4-chlorophenyl)-5-methylene-1H-pyrrol-2(5H)-one; spinosyns and derivatives such as spinosad; capsaicin and derivatives such as phenylcapsaicin; and enzymes such as oxidase, proteolytically, hemicellulolytically, cellulolytically, lipolytically and amylolytically active enzymes.

Preferred biocides are zinc pyrithione, copper pyrithione, zinc ethylenebis(dithiocarbamate) [zineb], 4,5-dichloro-2-n-octyl-4-isothiazolin-3-one [DCOIT], N-dichlorofluoromethylthio-N',N'-dimethyl-N-phenylsulfamide [dichlorofluanid], 4-bromo-2-(4-chlorophenyl)-5-trifluoromethyl)-1H-pyrrol-3-carbonitrile [tralopyril], copper di(ethyl 4,4,4-trifluoroacetoacetate) and phenyl capsaicin.

A mixture of biocides can be used as known in the art as different biocides operate against different marine fouling organisms. Mixtures of antifouling agents are generally preferred.

If biocides other than (iv-a) and (iv-b) are used, these will still be counted towards the total biocide content and hence the 10.0 wt% maximum.

Some biocides may be encapsulated, adsorbed on an inert carrier or bonded to other materials for controlled release. The weight of any such carrier is not to be considered when determining the 10.0 wt% maximum.

### Pigments and extenders (vi)

The coating compositions of the invention further comprises pigments and/or extenders. The total amount of extenders and/or pigments and biocides present in the compositions of the invention is at least 35 wt%, relative to the total weight of the coating composition as a whole. Having a total amount of extender and/or pigments and biocides of 35 wt% or more is important in order to achieve the appropriate self-polishing properties, coating film properties and sufficient antifouling performance.

Preferable total amounts of extenders and/or pigments and biocides are 35 to 60 wt%, more preferably 35 to 55 wt% and still more preferably 40 to 55 wt%, based on the total weight of the composition.

Preferable total amounts of extenders and/or pigments and biocides are 40 to 80 wt%, more preferably 45 to 75 wt% and still more preferably 50 to 75 wt%, based on the total dry weight of the coating composition.

The skilled person will appreciate that the extender and pigment content will vary depending on the particle size distribution, the particle shape, the surface morphology, the particle surface-resin affinity, the other components present and the end use of the coating composition.

Pigments are materials that provide colour to the coating composition. They are generally in the form of fine particles which are insoluble in the paint. The pigments may be inorganic pigments, organic pigments or a mixture thereof. Inorganic pigments are preferred. Examples of inorganic pigments include titanium dioxide, red iron oxide, yellow iron oxide, black iron oxide, zinc sulfide, lithopone and graphite. Examples of organic pigments include carbon black, phthalocyanine blue, phthalocyanine green, napthol red and diketopyrrolopyrrole red. Pigments may be surface treated. A variety of inorganic or organic surface treatments are used, e.g. to improved storage stability and to enhance pigment performance, such as rheological properties and dispersibility in the coating composition. As an example, titanium dioxide may be surface treated with a silicon compound, a zirconium compound, an aluminum compound and/or a zinc compound.

Extenders are materials added to paint to adjust or improve their properties. These materials have typically low colour strength and hence are distinguished from pigments. Extenders are typically in granular or powder form and are insoluble in the paint. The extenders may be inorganic or organic materials. Inorganic extenders are preferred. Inorganic extenders may be natural minerals or synthetic materials.

Examples of inorganic extenders include dolomite, plastorite, calcite, quartz, baryte, magnesite, silica, nepheline syenite, wollastonite, talc, chlorite, mica, kaolin, pyrophyllite, feldspar, calcium carbonate, magnesium carbonate, barium sulphate, zinc oxide, zinc phosphate, calcium silicate, silica,. Apart from the before mentioned extenders, the coating composition may also compromise reinforcing agents such as flakes and fibres, e.g. as described in WO 00/77102.

Preferably the antifouling coating compositions of the invention comprises zinc oxide as an extender.

### Other components

In addition to the components and optional components described above, the antifouling coating composition according to the present invention may optionally further comprise one or more components selected among other additives, solvents and thinners.

Examples of additives that can be added to an antifouling coating composition are rheology modifiers, wetting and dispersing agents and dehydrating agents.

Examples of rheology modifiers include thixotropic agents, thickening agents and anti-settling agents. Representative examples of rheology modifiers are silicas such as fumed silicas, organo-modified clays, amide waxes, polyamide waxes, amide derivatives, polyethylene waxes, oxidised polyethylene waxes, hydrogenated castor oil wax, ethyl cellulose, aluminium stearates and mixtures thereof. Rheology modifiers that need activation may be added to the coating composition as is and activated during the paint production process or they can be added to the coating composition in a pre-activated form, e.g. solvent paste. Preferably rheology modifiers are each present in the composition of the invention in an amount of 0 to 5.0 wt%, more preferably 0.2 to 3.0 wt% and still more preferably 0.5 to 2.0 wt%, based on the total weight of the coating composition.

Dehydrating agents improve the storage stability of the antifouling coating compositions comprising (meth)acrylic silyl ester copolymer (i). The dehydrating agent is preferably a compound which removes moisture and water from the coating composition. It is also referred to as water scavenger, drying agent or dessicant. The dehydrating agents may be hygroscopic materials that absorb water or bind water as crystal water or compounds that chemically react with water. Examples of dehydrating agents include materials such as anhydrous calcium sulphate, calcium sulphate hemihydrate, anhydrous magnesium sulphate, anhydrous sodium sulphate, anhydrous zinc sulphate, molecular sieves and zeolites; orthoesters such as trimethyl orthoformate, triethyl orthoformate, tripropyl orthoformate, triisopropyl orthoformate, tributyl orthoformate, trimethyl orthoacetate, triethyl orthoacetate tributyl orthoacetate and triethyl orthopropionate; ketals; acetals; enolethers; orthoborates such as trimethyl borate, triethyl borate, tripropyl borate, triisopropyl borate, tributyl borate and tri-*tert*-butyl borate; alkoxysilanes such as trimethoxymethylsilane, triethoxymethylsilane, tetraethoxysilane, phenyltrimetoxysilane, vinyltrimethoxysilane, vinyltriethoxysilane and ethyl polysilicate; and isocyanates, such as p-toluenesulfonyl isocyanate.

The preferred dehydrating agents are alkoxysilanes, such as tetraethoxysilane, and inorganic desiccants, such as anhydrous calcium sulphate, calcium sulphate hemihydrate and zeolite powders. The use of an alkoxysilane is especially preferred.

Preferably the dehydrating agents are added to the coating compositions of the invention in an amount of 0 to 5.0 wt%, more preferably 0.5 to 2.5 wt% and still more preferably 1.0 to 2.0 wt%, based on the total weight of the composition.

Preferably the dehydrating agents are added to the compositions of the invention in an amount of 0 to 7.0 wt%, more preferably 0.5 to 4.0 wt% and still more preferably 1.0 to 3.0 wt%, based on the total dry weight of the coating composition.

It is highly preferred if the antifouling composition contains a solvent. This solvent is preferably volatile and is preferably organic. Examples of organic solvents and thinners are aromatic hydrocarbons such as xylene, toluene, mesitylene; ketones such as methyl ethyl ketone, methyl propyl ketone, methyl isobutyl ketone, methyl isoamyl ketone, methyl amyl ketone, diisobutyl ketone, cyclopentanone, cyclohexanone; esters such as butyl acetate, *tert*-butyl acetate, amyl acetate, isoamyl acetate, propyl propionate, n-butyl propionate, isobutyl isobutyrate; ether esters such as ethylene glycol methyl ether acetate, ethyl 3-ethoxypropionate; ethers such as ethylene glycol dimethyl ether, diethylene glycol dimethyl ether, dibutyl ether, dioxane, tetrahydrofuran; alcohols such as *n*-butanol, isobutanol, methyl isobutyl carbinol, benzyl alcohol; ether alcohols such as butoxyethanol, 1-methoxy-2-propanol; terpenes such as limonene; aliphatic hydrocarbons such as white spirit; and optionally a mixture of two or more solvents and thinners.

Preferred solvents are aromatic hydrocarbon solvents, ketones and alcohols and mixtures thereof, especially xylene and mixtures of aromatic hydrocarbons.

The amount of solvent is preferably as low as possible. The solvent content may be up to 45 wt% of the composition, preferably up to 35 wt% of the composition, such as up to 30 wt% but may be as low as 20 wt% or less, e.g. 15 wt% or less. Again, the skilled person will appreciate that some raw materials comprise solvent and contribute to the total solvent content as specified above and that the solvent content will vary depending on the other components present and the end use of the coating composition.

The skilled person will appreciate that the solvent used will depend on the recommended application method of the final product.

Alternatively, the coating can be dispersed in an organic non-solvent for the film-forming components in the coating composition or in an aqueous dispersion.

### Coating composition

The composition as described herein may be prepared in a suitable concentration for use, e.g. in spray application. In this case, the composition is itself a paint. Alternatively, the composition may be a concentrate for preparation of paint. In this case, further solvent and optionally other components are added to the composition described herein to form a paint. Preferred solvents are as hereinbefore described in relation to the composition.

The coating composition may be supplied as one-pack or as a two-pack or as a three-pack. If a curing agent is present it will obviously be kept separate from the curable component until application on a substrate. Whilst the biocides can be kept in a separate component from the binder, it is preferred if these are present together in the supplied formulation.

When supplied as a one-pack, the composition is preferably supplied in a ready-mixed or ready to use form. Optionally the one-pack product may be thinned with solvents prior to application.

The antifouling coating composition of the invention should preferably have solids content above 60 wt%, e.g. above 65 wt%, preferably above 70 wt%.

The antifouling coating composition of the invention should preferably have solids content above 40 vol%, e.g. above 45 vol%, preferably above 50 vol%.

More preferably the antifouling coating composition should have a volatile organic compound content (VOC content) below 500 g/L, preferably below 420 g/L, more preferably below 400 g/L, e.g. below 380 g/L, below 350 g/L and below 300 g/L. VOC content can be calculated, e.g. as described in ASTM D5201-01 or IED 2010/75/EU, or measured, e.g. as described in US EPA Method 24 or ISO 11890-2.

The viscosity of the coating composition may be in the range of less than 2000 cP, such as less than 1000 cP, e.g. less than 800 cP and less than 500 cP when measured using a Cone and Plate viscometer in accordance with ISO 2884-1:2006. Viscosities of 200 cP or more can be used.

In one embodiment, the antifouling coating composition comprises
component (i) in an amount of 2.0 to 30 wt%, relative to the total weight of the coating compositions as a whole, preferably 5.0 to 25 wt%;
component (v) in an amount of 0.5 to 10 wt%, relative to the total weight of the coating compositions as a whole, preferably 1.0 to 5.0 wt%;
and component (iii) in an amount of 5.0 to 30 wt% based on the total weight of the coating composition as a whole.

In one embodiment, the antifouling coating composition comprises
component (i) in an amount of 2.0 to 30 wt%, relative to the total weight of the coating compositions as a whole, preferably 5.0 to 25 wt%;
component (v) in an amount of 0.5 to 10 wt%, relative to the total weight of the coating compositions as a whole, preferably 1.0 to 5.0 wt%;
and component (iii) in an amount of 5.0 to 30 wt% based on the total weight of the coating composition as a whole;
medetomidine in an amount of 0.05 to 1.0 wt%, relative to the total weight of the composition, preferably 0.05 to 0.7 wt%, more preferably 0.05 to 0.5 wt%, even more preferably 0.1 to 0.3 wt%; and
one or more copper compounds in an amount of 0.1 to 8.0 wt%, relative to the total weight of the composition preferably 0.2 to 5.0 wt%, more preferably 0.3 to 3.0 wt%.

In one embodiment, the antifouling coating composition comprises
component (ii) in an amount of 2.0 to 30 wt%, relative to the total weight of the coating compositions as a whole, preferably 5.0 to 25 wt%;
component (v) in an amount of 0.5 to 10 wt%, relative to the total weight of the coating compositions as a whole, preferably 1.0 to 5.0 wt%;
and component (iii) in an amount of 5.0 to 30 wt% based on the total weight of the coating composition as a whole;
medetomidine in an amount of 0.05 to 1.0 wt%, relative to the total weight of the composition, preferably 0.05 to 0.7 wt%, more preferably 0.05 to 0.5 wt%, even more preferably 0.1 to 0.3 wt%; and
one or more copper compounds is present in an amount of 0.1 to 8.0 wt%, relative to the total weight of the composition preferably 0.2 to 5.0 wt%, more preferably 0.3 to 3.0 wt%.

### Method for producing antifouling coating composition

The antifouling coating composition can be prepared using any process known in the art. The order of adding and mixing the ingredients is preferably done as recommended by the suppliers of the ingredients and the mixing equipment.

Biocides can be pre-mixed in a solution or a paste containing a binder component and/or a solvent and/or pigment, such as zinc oxide, for safer and easier handling during the paint production process, for improved storage stability of the coating composition and/or improved antifouling performance of the applied coating.

### Application

The antifouling coating composition of the invention can be applied to a whole or part of any object surface which is subject to fouling. The surface may be permanently or intermittently underwater (e.g. through tide movement, different cargo loading or swell). The object surface will typically be the hull of a vessel or surface of a fixed marine object such as an oil platform or buoy. Application of the coating composition can be accomplished by any convenient means, e.g. via painting (e.g. with brush or roller) or spraying (e.g. airless spray) the coating onto the object. Typically, the surface will need to be separated from the seawater to allow coating. The application of the coating can be achieved as conventionally known in the art.

When applying the antifouling coating to an object (e.g. a ship hull) the surface of the object is not protected solely by a single coat of antifouling. Depending on the nature of the surface, the antifouling coating can be applied directly to an existing coating system. Such a coating system may comprise several layers of paint of different generic types (e.g. epoxy, polyester, vinyl or acrylic or mixtures thereof). Starting with an uncoated surface (e.g. steel, aluminium, composite) the full coating system will typically comprise one or two layers of a primer or an anticorrosive coating (e.g. curable epoxy coating or curable modified epoxy coating), one layer of tie-coat (e.g. curable modified epoxy coating or physical drying vinyl coating) and one or two layers of antifouling paint. In exceptional cases further layers of antifouling paint may be applied. If the surface is a clean and intact antifouling coating from a previous application, the new antifouling paint can be applied directly, typically as one or two coats with more in exceptional cases. When two or more coats of antifouling coating composition is applied, the different coats can be antifouling coatings of different compositions creating a coating system with different antifouling coating layers.

The antifouling coating layers may differ in type and/or amount of biocide and binder, binder composition and/or polishing rate.

In certain cases, for example for outfitting applications, it is preferred if antifouling coating compositions having different polishing rates are used in different coating layers. It is then preferred if the outermost layer has a higher polishing rate than the subsequent layers.

The coating formed from the coating composition of the invention can also be cleaned by for example robots, remotely operated vehicles (ROVs) or manually operated equipment. The cleaning can be reactive or proactive. The underwater cleaning can for example be made using mechanical means (such as brushes, squegee), high pressure water, UV light, laser or ultrasound. Robots used for underwater cleaning is for example described in WO2019/170888, WO2020/207791 and WO2020/207792. Cleaning settings that can be used when using brushes are for example described in WO2021180588.

The invention will now be defined with reference to the following nonlimiting examples.

### Examples

### Materials and methods

### Determination of polymer solution viscosity

The viscosity of the polymers was determined in accordance with ASTM D2196 Test Method A using Brookfield DV-I Prime digital viscometer with a LV-2 (62) spindle at a rotational speed of 12 rpm. The polymer solutions were conditioned to a temperature of 23.0 °C ± 0.5 °C before the measurements.

### Determination of non-volatile matter content of the polymer solutions

The non-volatile matter content in the polymer solutions was determined as described in ISO 3251:2019. A test sample of 0.5 g ± 0.1 g was taken out and dried in a ventilated oven at 105 °C for 3 hours. The weight of the residual material was considered to be the non-volatile matter (NVM). The non-volatile matter content is expressed as weight fraction in percent. The value given is the average of three parallel measurements.

### Determination of polymer molecular weights distribution

The polymers were characterised by Gel Permeation Chromatography (GPC) measurement. The molecular weight distribution (MWD) was determined using a Malvern Omnisec Resolve and Reveal system with two PLgel 5 µm Mixed-D columns from Agilent in series. The columns were calibrated by conventional calibration using narrow polystyrene standards. The analysis conditions were as set out below.

| | | |
|---|---|---|
| Detector | RI | |
| Wavelength | 640 nm | |
| Flow cell volume | 12 µl | |
| Column Set | Agilent PLgel 5 µm Mixed-D, 2 columns in series | |
| Mobile Phase | • | THF (standard) |
| | • | THF with 1% acetic acid for polymers having carboxylic acid functionality |
| Flow rate | 1 ml/min | |
| Injection volume | 100 µl | |
| Autosampler Temperature | 25 °C | |
| Column Oven Temperature | 35 °C | |
| Detector Oven Temperature | 35 °C | |
| Data Processing | Omnisec 5.1 | |
| Calibration standards | Agilent Polystyrene Medium EasiVials (4 ml) Red, Yellow and Green | |

Samples were prepared by dissolving an amount of polymer solution corresponding to 25 mg dry polymer in 5 ml tetrahydrofuran (THF). The samples were kept for minimum 3 hours at room temperature prior to sampling for the GPC measurements. Before analysis the samples were filtered through 0.45 µm Nylon filters. The weight-average molecular weight (Mw) and the number-average molecular weight (Mn) are reported. The polydispersity index (PDI) is given as Mw/Mn.

### Determination of the glass transition temperature

The glass transition temperature (Tg) was obtained by Differential Scanning Calorimetry (DSC) measurements. The DSC measurements were performed on a TA Instruments DSC Q200 by running a heat-cool-heat procedure, within a temperature range from -80 °C to 150 °C, with a heating rate of 10 °C/min and cooling rate of 10 °C/min and using an empty pan as reference. The data were processed using Universal Analysis software from TA Instruments. The inflection point of the glass transition range, as defined in ISO 11357-2:2020, of the second heating is reported as the Tg of the polymers.

Samples were prepared by making drawdown of the polymer solutions on individual glass panels using an applicator with 100 µm gap size. The glass panels were dried over night at room temperature and subsequently 24 hours at 50 °C in a ventilated heating cabinet. The dry polymer material was scraped off the glass panels and approx. 10 mg of the dry polymer material was transferred to an aluminium pan. The pan was sealed with a non-hermetic lid for the measurement.

### Procedure for preparation of copolymer solution S1

60.0 parts xylene was charged to a temperature-controlled reaction vessel equipped with a stirrer, a condenser, a nitrogen inlet, and a feed inlet. The reaction vessel was heated and maintained at the reaction temperature of 90 °C. A pre-mix of 55.0 parts triisopropylsilyl methacrylate, 10.0 parts 2-(2-ethoxyethoxy)ethyl acrylate, 5.0 parts n-butyl acrylate, 30.0 parts methyl methacrylate and 1.20 parts 2,2'-azobis(2-methylbutyronitril) was prepared. The pre-mix was charged to the reaction vessel at a constant rate over 2 hours under a nitrogen atmosphere using a metering pump. After further 30 minutes reaction, a boost initiator solution of 0.20 parts 2,2'-azobis(2-methylbutyronitril) and 7.6 parts xylene was fed to the reaction vessel at a constant rate over 20 minutes. The reaction vessel was maintained at the reaction temperature for a further 1.5 hours. The reactor was then heated to 105 °C and kept at that temperature for 1 hour. Finally, the reactor was cooled to room temperature. The parts given above are all parts by weight.

The copolymer solution S1 had the following properties:
NVM: 60.4 wt%; Viscosity 1569 cP; Mw 28,072; PD 2.66; Tg 49 °C

Copolymer solution S2 to S5 were made in a similar manner as described above. The monomer compositions and procedure details are given in Table 1.

### Procedure for preparation of copolymer solution A1

40.0 parts xylene and 10.0 parts 1-methoxy-2-propanol were charged to a temperature-controlled reaction vessel equipped with a stirrer, a reflux condenser, a nitrogen inlet, and a feed inlet. The reaction vessel was heated and maintained at the reaction temperature of 100 °C. A pre-mix of 85.0 parts n-butyl acrylate, 12.0 parts methyl methacrylate, 3.0 parts methacrylic acid and 1.50 parts *tert*-amyl peroxy-2-ethylhexanoate was prepared. The pre-mix was charged to the reaction vessel at a constant rate over 3 hours under a nitrogen atmosphere using a metering pump. After further 30 minutes reaction a boost initiator solution of 0.40 parts tert-amyl peroxy-2-ethylhexanoate and 5.0 parts xylene was fed to the reaction vessel at a constant rate over 20 minutes. The reaction vessel was maintained at the reaction temperature for a further 1.5 hour and then cooled to room temperature. The parts given above are all parts by weight.

The copolymer solution A1 had the following properties:
NVM: 65.3 wt%; Viscosity 579 cP; Mw 23,814; PDI 2.91; Tg -32 °C

Copolymer solution A2 to A3 were made in a similar manner as described above. In the preparation of A2 and A3 *tert*-butyl peroxy-2-ethylhexanoate was used as initiator. The monomer compositions and procedure details are given in Table 2.

### Procedure for preparation of zinc rosinate solution Z1

88 parts rosin solution (60 wt% gum rosin in xylene, 7 parts zinc oxide and 5 parts xylene were charged to a temperature-controlled reaction vessel equipped with a stirrer and a reflux condenser. The mixture was slowly heated to 70 °C and kept at that temperature for 2 hours. The temperature was turned off and the solution was stirred during the cooling to room temperature.

The zinc rosinate solution Z1 had NVM of 62.1 wt%.

**Table 1: Summary of (meth)acrylic silyl ester copolymer (i) examples**

| | | **S1** | **S2** | **S3** | **S4** | **S5** |
|---|---|---|---|---|---|---|
| Monomers (parts by weight) | n-Butyl acrylate | 5 | 10 | 10 | 10 | |
| | Methyl methacrylate | 30 | 30 | 10 | 35 | 40 |
| | 2-Methoxyethyl acrylate | | | | | 5 |
| | 2-Methoxyethyl methacrylate | | | 30 | | |
| | 2-(2-Ethoxyethoxy)ethyl acrylate | 10 | 5 | | | |
| | Triisopropylsilyl acrylate | | | | 55 | 55 |
| | Triisopropylsilyl methacrylate | 55 | 55 | 50 | | |
| | Sum | 100 | 100 | 100 | 100 | 100 |
| | | | | | | |
| Procedure details | Polymerization temperature (°C) | 90 | 95 | 85 | 95 | 95 |
| | Initiator in monomer feed (wt% of monomers) | 1.20 | 1.10 | 1.00 | 1.20 | 1.20 |
| | | | | | | |
| Properties | Non-volatile matter (wt%) | 60.4 | 60.1 | 59.9 | 60.3 | 60.7 |
| | Viscosity (cP) | 1596 | 1089 | 1725 | 594 | 929 |
| | Mw (x 10³) | 28.1 | 23.9 | 40.5 | 21.6 | 22.0 |
| | Mn (x 10³) | 10.6 | 9.9 | 12.8 | 7.4 | 6.9 |
| | Tg (°C) | 49 | 47 | 38 | 32 | 42 |

**Table 2: Summary of (meth)acrylic copolymers (v) and (ii).**

| | | **A1** | **A2** | **A3** |
|---|---|---|---|---|
| Monomers (parts by weight) | n-Butyl acrylate | 85 | 93 | 20 |
| | Methyl methacrylate | 12 | 4 | 60 |
| | 2-(2-Ethoxyethoxy)ethyl acrylate | | | 20 |
| | Methacrylic acid | 3 | 3 | |
| | Sum | 100 | 100 | 100 |
| | | | | |
| Procedure details | Polymerization temperature (°C) | 100 | 100 | 105 |
| | Initiator in monomer feed (wt% of monomers) | 1.50 | 1.20 | 1.70 |
| | | | | |
| Properties | Non-volatile matter (wt%) | 65.3 | 65.4 | 51.9 |
| | Viscosity (cP) | 579 | 477 | 597 |
| | Mw (x 10³) | 23.8 | 27.4 | 26.9 |
| | Mn (x 10³) | 8.2 | 8.3 | 8.8 |
| | Tg (°C) | -32 | -38 | 23 |

**Table 3: Ingredients used in the examples.**

| **Ingredients** | **Trade name** | **Manufacturer / supplier** | **Purpose** | **Remarks** |
|---|---|---|---|---|
| Copper(I) oxide #1 | Cuprous oxide PG red | Nordox | Cu compound | |
| Copper(I) oxide #2 | Lolo tint LM | American Chemet | Cu compound | |
| Copper powder # 1 | Chem Copp 1700 FPM | American Chemet | Cu compound | |
| Copper flakes #1 | Standart ActiMar Cu 1700 | Eckart | Cu compound | |
| Copper(II) sulfide | Q+ | Kolon | Cu compound | |
| Copper(I) thiocyanate | Cuprous thiocyanate | Bardyke Chemicals | Cu compound | |
| Medetomidine | Selektope | 1-Tech | Biocide | |
| Copper pyrithione | CleanBio-Cu | Kolon | Biocide | |
| Copper pyrithione and copper chelate complex¹ mixture | | Arxada | Biocide | |
| Zinc pyrithione | Zinc Omadine | Arxada | Biocide | |
| DCOIT #1 | Sea-Nine 211 | Lanxess | Biocide | Supplied as a solution of 30 wt% DCOIT in xylene. |
| DCOIT #2 | Sea-Nine Ultra | Lanxess | Biocide | Encapsulated. Contains 80 wt% DCOIT. |
| Zineb | Perozin Marine | Agria | Biocide | |
| Tralopyril | Econea | Janssen | Biocide | |
| Gum rosin | Portuguese gum rosin WW | A.V.Pound | Rosin compound | Used as 60 wt% solution in xylene |
| Isostearic acid (liquid) | Radiacid 0907 | Oleon | Other binder | Contains 87% branched C16-C18 fatty acids. |
| | | | | Acid value 185-195 mg KOH/g |
| Polyamide wax | Disparlon A603-20X | Kusomoto | Rheology modifier | Supplied as 20% in xylene |
| Organoclay | Bentone 52 | Elementis Specialities | Rheology modifier | |
| Iron oxide red | Bayferrox 130 M | Lanxess | Pigment | |
| Talc | Finntalc M12 | Elementis | Extender | |
| Zinc phosphate | Delaphos 2M | Delaphos | Extender | |
| Dolomite | Microdol 1 | Omya | Extender | |
| Zinc oxide | Zinc oxide red seal | Everzinc | Extender | |
| Tetraethoxysilane | | | Water scavenger | |
| Xylene | | | Solvent | Mixture of isomers; contains less than 15 wt% ethylbenzene |
| Aromatic hydrocarbons | | | Solvent | Contains more than 96% aromatic hydrocarbons. |
| | | | | Boiling point range 150-185 °C |

| | | | | |
|---|---|---|---|---|
| ¹As described in WO2020115323A1 | | | | |

### Calculation of the volatile organic compound (VOC) content of the antifouling coating composition

The volatile organic compound (VOC) content of the antifouling coating composition was calculated in accordance with ASTM D5201.

### Determination of paint viscosity using Cone and Plate viscometer

The viscosity of the antifouling paint composition was determined in accordance with ISO 2884-1:2006 using a digital Cone and Plate viscometer set at a temperature of 23 °C, working at a shear rate of 10 000 s⁻¹ and providing viscosity measurement range of 0-10 P. The result is given as the average of three measurements.

### General procedure for preparation of antifouling coating compositions

The components were mixed in the proportions given in Tables 5 to 12. The order of mixing the ingredients and preparation of pre-mix of selected ingredients were done in accordance with the raw material suppliers' guidelines. The ingredients were dispersed and grinded in the presence of glass beads (approx. 3-4 mm in diameter) in a 250 ml paint can using a vibrational shaker.

### Testing of antifouling performance

PVC panels (20 cm x 30 cm) were used for the test. The panels were coated with a first coat of a commercial tiecoat (Safeguard Plus, manufactured by Chokwang Jotun Ltd., Korea) using airless spray and a second coat of a commercial antifouling paint (SeaQuantum Ultra III, manufactured by Jotun Paints (Europe) Ltd., England). The curing/drying time and film thicknesses of the first coat and the second coat were within the recommended intervals in the technical data sheets for the products.

The antifouling coating compositions of the examples were applied directly to the pre-coated PVC panels as a last coat using a film applicator with a 400 µm gap size. The test areas of the applied coating films were approx. 6.5 cm x 25 cm. The edges of the panels were sealed with a commercial antifouling product. The antifouling coating compositions of the examples were applied within 3 to 10 days after paint preparation.

The panels were exposed on raft in Singapore where the panels were submerged 0.5 to 1.5 m below the sea surface. The panels were evaluated by visual inspection and rated according to the scale below. Macroalgae, such as seaweed, and animal fouling, such as barnacles, tubeworms, mussels, sponges and hydroids, were included in the rating. Microfouling organisms, such as biofilm or slime, which can easily be removed by hand, is not included in the rating. Edge effects were excluded from the evaluation.

**Table 4: Rating scale for degree of fouling**

| **Rating** | **Area covered by fouling** |
|---|---|
| 0 | Only slime |
| 1 | 1-10% |
| 2 | 11-25 % |
| 3 | 26-50 % |
| 4 | 51-100% |

### Testing

**Table 5: Examples 1 to 9**

| | | | **1** | **2** | **3** | **4** | **5** | **6** | **7** | **8** | **9** |
|---|---|---|---|---|---|---|---|---|---|---|---|
| Binder (i) | S1 | | 19.0 | 19.0 | 19.0 | 19.0 | 19.0 | 19.0 | 19.0 | 19.0 | 19.0 |
| Binder (iii) | Rosin solution (60% in xylene) | | 17.5 | 17.5 | 17.5 | 17.5 | 17.5 | 17.5 | 17.5 | 17.5 | 17.5 |
| Binder (v) | A1 | | 3.0 | 3.0 | 3.0 | 3.0 | 3.0 | 3.0 | 3.0 | 3.0 | 3.0 |
| Biocide (iv-a) | Medetomidine | | 0.20 | 0.20 | 0.20 | 0.20 | 0.20 | 0.20 | 0.20 | 0.20 | 0.20 |
| Cu compounds (iv-b) | Copper(I) oxide #1 | | 1.0 | 2.0 | 5.0 | | | | | | |
| | Copper(I) oxide #2 | | | | | 1.0 | | | | | |
| | Copper powder #1 | | | | | | 1.0 | 2.0 | 5.0 | | |
| | Copper flakes #1 | | | | | | | | | 1.0 | |
| | Copper(I) thiocyanate | | | | | | | | | | 2.0 |
| Other biocide | Copper pyrithione and copper chelate complex mixture | | 3.0 | 3.0 | 3.0 | 3.0 | 3.0 | 3.0 | 3.0 | 3.0 | 3.0 |
| Pigments and extenders | Iron oxide red | | 5.0 | 5.0 | 5.0 | 5.0 | 5.0 | 5.0 | 5.0 | 5.0 | 5.0 |
| | Talc | | 11.0 | 11.0 | 11.0 | 11.0 | 11.0 | 11.0 | 11.0 | 11.0 | 11.0 |
| | Zinc phosphate | | 27.5 | 27.5 | 27.5 | 27.5 | 27.5 | 27.5 | 27.5 | 27.5 | 27.5 |
| | Zinc oxide | | 6.5 | 6.5 | 6.5 | 6.5 | 6.5 | 6.5 | 6.5 | 6.5 | 6.5 |
| Additives | Tetraethoxysilane | | 1.0 | 1.0 | 1.0 | 1.0 | 1.0 | 1.0 | 1.0 | 1.0 | 1.0 |
| | Polyamide wax (20% in xylene) | | 1.5 | 1.5 | 1.5 | 1.5 | 1.5 | 1.5 | 1.5 | 1.5 | 1.5 |

| | | | **1** | **2** | **3** | **4** | **5** | **6** | **7** | **8** | **9** |
|---|---|---|---|---|---|---|---|---|---|---|---|
| Solvents | Xylene | | 4.0 | 4.0 | 4.0 | 4.0 | 4.0 | 4.0 | 4.0 | 4.0 | 4.0 |
| | Aromatic hydrocarbons | | 2.0 | 2.0 | 2.0 | 2.0 | 2.0 | 2.0 | 2.0 | 2.0 | 2.0 |
| | Sum total | | 102.2 | 103.2 | 106.2 | 102.2 | 102.2 | 103.2 | 106.2 | 102.2 | 103.2 |
| | | | | | | | | | | | |
| Calculated values for coating composition | Medetomidine (iv-a) content (wt%) | | 0.20 | 0.19 | 0.19 | 0.20 | 0.20 | 0.19 | 0.19 | 0.20 | 0.19 |
| | Cu compound (iv-b) content (wt%) | | 0.98 | 1.94 | 4.71 | 0.98 | 0.98 | 1.94 | 4.71 | 0.98 | 1.94 |
| | Total biocides (iv) content (wt%) | | 4.11 | 5.04 | 7.72 | 4.11 | 4.11 | 5.04 | 7.72 | 4.11 | 5.04 |
| | Total pigment, extender and biocide content (wt%) | | 53.0 | 53.5 | 54.8 | 53.0 | 53.0 | 53.5 | 54.6 | 53.0 | 53.5 |
| | VOC (g/L) | | 354 | 353 | 350 | 354 | 354 | 353 | 352 | 354 | 351 |
| | | | | | | | | | | | |
| Test results | Cone & plate viscosity (cP) | | 643 | 682 | 697 | 611 | 632 | 675 | 695 | 632 | 661 |
| | Raft Singapore | 1 month | 0 | 0 | 0 | 0 | 0 | 0 | 0 | 0 | 0 |
| | | 2 months | 0 | 0 | 0 | 0 | 0 | 0 | 0 | 0 | 0 |
| | | 4 months | 0 | 0 | 1 | 0 | 0 | 1 | 0 | 0 | 1 |
| | | 6 months | 0 | 1 | 1 | 1 | 0 | 1 | 1 | 1 | 1 |

**Table 6: Examples 10 to 18**

| | | | **10** | **11** | **12** | **13** | **14** | **15** | **16** | **17** | **18** |
|---|---|---|---|---|---|---|---|---|---|---|---|
| Binder (i) | S1 | | 19.0 | 19.0 | 19.0 | 19.0 | 19.0 | 19.0 | 19.0 | 19.0 | 19.0 |
| Binder (iii) | Rosin solution (60% in xylene) | | 17.5 | 17.5 | 17.5 | 17.5 | 17.5 | 17.5 | 17.5 | 17.5 | 17.5 |
| Binder (v) | A1 | | 3.0 | 3.0 | 3.0 | 3.0 | 3.0 | 3.0 | 3.0 | 3.0 | 3.0 |
| Biocide (iv-a) | Medetomidine | | 0.20 | 0.20 | 0.20 | 0.05 | 0.10 | 0.15 | 0.25 | 0.30 | 0.40 |
| Cu compounds (iv-b) | Copper(I) oxide #1 | | 2.0 | 1.0 | 1.0 | 1.0 | 1.0 | 1.0 | 1.0 | 1.0 | 1.0 |
| | Copper powder # 1 | | | 1.0 | 1.0 | | | | | | |
| | Copper(I) thiocyanate | | | | 1.0 | | | | | | |
| Other biocides | Copper pyrithione | | 1.0 | 1.0 | 1.0 | | | | | | |
| | Copper pyrithione and Copper chelate complex mixture | | | | | 3.0 | 3.0 | 3.0 | 3.0 | 3.0 | 3.0 |
| Pigments and extenders | Iron oxide red | | 5.0 | 5.0 | 5.0 | 5.0 | 5.0 | 5.0 | 5.0 | 5.0 | 5.0 |
| | Talc | | 11.0 | 11.0 | 11.0 | 11.0 | 11.0 | 11.0 | 11.0 | 11.0 | 11.0 |
| | Zinc phosphate | | 27.5 | 27.5 | 27.5 | 27.5 | 27.5 | 27.5 | 27.5 | 27.5 | 27.5 |
| | Zinc oxide | | 6.5 | 6.5 | 6.5 | 6.5 | 6.5 | 6.5 | 6.5 | 6.5 | 6.5 |
| Additives | Tetraethoxysilane | | 1.0 | 1.0 | 1.0 | 1.0 | 1.0 | 1.0 | 1.0 | 1.0 | 1.0 |
| | Polyamide wax (20% in xylene) | | 1.5 | 1.5 | 1.5 | 1.5 | 1.5 | 1.5 | 1.5 | 1.5 | 1.5 |
| Solvents | Xylene | | 4.0 | 5.0 | 5.0 | 4.0 | 4.0 | 4.0 | 4.0 | 4.0 | 4.0 |
| | Aromatic hydrocarbons | | 2.0 | 2.0 | 2.0 | 2.0 | 2.0 | 2.0 | 2.0 | 2.0 | 2.0 |
| | Sum total | | 101.2 | 102.2 | 103.2 | 102.05 | 102.1 | 102.15 | 102.25 | 102.3 | 102.4 |

| | | | **10** | **11** | **12** | **13** | **14** | **15** | **16** | **17** | **18** |
|---|---|---|---|---|---|---|---|---|---|---|---|
| | | | | | | | | | | | |
| Calculated values for coating composition | Medetomidine (iv-a) content (wt%) | | 0.20 | 0.19 | 0.20 | 0.05 | 0.10 | 0.15 | 0.24 | 0.29 | 0.39 |
| | Cu compound (iv-b) content (wt%) | | 1.98 | 1.96 | 2.91 | 0.98 | 0.98 | 0.98 | 0.98 | 0.98 | 0.98 |
| | Total biocides (iv) content (wt%) | | 3.16 | 3.13 | 4.07 | 3.97 | 4.02 | 4.06 | 4.16 | 4.20 | 4.30 |
| | Total pigment, extender and biocide content (wt%) | | 52.6 | 52.1 | 52.5 | 53.0 | 53.0 | 53.0 | 53.1 | 53.1 | 53.1 |
| | VOC (g/L) | | 360 | 368 | 366 | 354 | 354 | 354 | 354 | 353 | 353 |
| | | | | | | | | | | | |
| Test results | Cone & plate viscosity (cP) | | 713 | 760 | 749 | 574 | 578 | 656 | 666 | 673 | 719 |
| | Raft Singapore | 1 month | 0 | 0 | 0 | 0 | 0 | 0 | 0 | 0 | 0 |
| | | 2 months | 0 | 0 | 0 | 0 | 0 | 0 | 0 | 0 | 0 |
| | | 4 months | 0 | 1 | 1 | 1 | 1 | 1 | 0 | 1 | 0 |
| | | 6 months | 0 | 1 | 1 | 1 | 1 | 1 | 0 | 0 | 1 |

**Table 7: Comparative examples C1 to C6 - comparatives to Table 5Testing**

| Table 5 and Table 6 | | | | | | | | |
|---|---|---|---|---|---|---|---|---|
| | | | **C1** | **C2** | **C3** | **C4** | **C5** | **C6** |
| Binder (i) | S1 | | 19.0 | 19.0 | 19.0 | 19.0 | 19.0 | 19.0 |
| Binder (iii) | Rosin solution (60% in xylene) | | 17.5 | 17.5 | 17.5 | 17.5 | 17.5 | 17.5 |
| Binder (v) | A1 | | 3.0 | 3.0 | 3.0 | 3.0 | 3.0 | 3.0 |
| Biocide (iv-a) | Medetomidine | | 0.20 | 0.30 | | | | |
| Cu compounds (iv-b) | Copper(I) oxide # 1 | | | | 1.0 | | 1.0 | |
| | Copper powder # 1 | | | | | 1.0 | | 1.0 |
| Other biocides | Copper pyrithione | | | | | | 1.0 | 1.0 |
| | Copper pyrithione and copper chelate complex mixture | | 3.0 | 3.0 | 3.0 | 3.0 | | |
| Pigments and extenders | Iron oxide red | | 5.0 | 5.0 | 5.0 | 5.0 | 5.0 | 5.0 |
| | Talc | | 11.0 | 11.0 | 11.0 | 11.0 | 11.0 | 11.0 |
| | Zinc phosphate | | 27.5 | 27.5 | 27.5 | 27.5 | 27.5 | 27.5 |
| | Zinc oxide | | 6.5 | 6.5 | 6.5 | 6.5 | 6.5 | 6.5 |
| Additives | Tetraethoxysilane | | 1.0 | 1.0 | 1.0 | 1.0 | 1.0 | 1.0 |
| | Polyamide wax (20% in xylene) | | 1.5 | 1.5 | 1.5 | 1.5 | 1.5 | 1.5 |
| Solvents | Xylene | | 4.0 | 4.0 | 4.0 | 4.0 | 5.0 | 5.0 |
| | Aromatic hydrocarbons | | 2.0 | 2.0 | 2.0 | 2.0 | 2.0 | 2.0 |

| | | | **C1** | **C2** | **C3** | **C4** | **C5** | **C6** |
|---|---|---|---|---|---|---|---|---|
| | Sum total | | 101.2 | 101.3 | 102.0 | 102.0 | 101.0 | 102.0 |
| | | | | | | | | |
| Calculated values for coating composition | Medetomidine (iv-a) content (wt%) | | 0.20 | 0.30 | - | - | - | - |
| | Cu compound (iv-b) content (wt%) | | - | - | 0.98 | 0.98 | 0.99 | 0.99 |
| | Total biocides (iv) content (wt%) | | 3.16 | 3.26 | 3.92 | 3.92 | 1.98 | 1.98 |
| | Total pigment, extender and biocide content (wt%) | | 52.6 | 52.6 | 52.9 | 52.9 | 51.5 | 51.5 |
| | VOC (g/L) | | 355 | 354 | 355 | 355 | 370 | 370 |
| | | | | | | | | |
| Test results | Cone & plate viscosity (cP) | | 611 | 637 | 507 | 590 | 700 | 662 |
| | Raft Singapore | 1 month | 1 | 1 | 1 | 1 | 1 | 0 |
| | | 2 months | 3 | 3 | 1 | 1 | 1 | 1 |
| | | 4 months | 4 | 3 | 3 | 3 | 3 | 3 |
| | | 6 months | 3 | 3 | 4 | 4 | 3 | 3 |

### Comments to tables 5, 6 and 7:

In examples 1-12 in Table 5 and Table 6 coating compositions comprising medetomidine and different copper compounds are tested. Examples 1-12 show that it is possible to make antifouling coating compositions comprising less than 10.0 wt% of biocides that have excellent antifouling properties. This is achieved by using the combination of a copper compound comprising more than 40 wt% copper and medetomidine together with a (meth)acrylic silyl copolymer (i) and a (meth)acrylic copolymer (v), a rosin (iii). Examples 1-8 show that different copper compounds can be used in the present invention.

In examples 13-18 in Table 6 a copper compound and different amounts of medetomidine are tested. All the formulations in examples 13-18 gave good antifouling performance.

Comparative example C1 in Table 7 is directly comparable to example 1 in Table 5. In comparative example C1 the copper compound is missing. The antifouling performance after 6 months is then poor. Comparative example C1 show that it is not enough to use medetomidine alone to achieve good long term antifouling performance.

Comparative example C2 also shows that the absence of the copper compound causes fouling.

Comparative example C3 can also be directly compared with example 1. In comparative example C3, medetomidine is missing. The antifouling performance after 5 months is then poorer showing that the combination of the copper compound and medetomidine is essential for achieving good long-term antifouling performance in coating compositions comprising less than 10.0 wt% in total amount of biocides.

Comparative examples C4-C6 show that the antifouling performance is reduced if medetomidine is not present also when other copper compounds are used.

**Table 8: Examples 19 to 27**

| | | | **19** | **20** | **21** | **22** | **23** | **24** | **25** | **26** | **27** |
|---|---|---|---|---|---|---|---|---|---|---|---|
| Binders (i) | S1 | | | | 17.0 | 17.0 | | 17.0 | | | 19.0 |
| | S2 | | | | | | 17.0 | | | | |
| | S3 | | 19.0 | 19.0 | | | | | | | |
| | S4 | | | | | | | | 19.0 | | |
| | S5 | | | | | | | | | 19.0 | |
| Binder (iii) | Rosin solution (60% in xylene) | | 17.5 | 17.5 | 18.5 | 18.5 | 18.5 | 18.5 | 17.5 | 17.5 | 17.5 |
| Binder (v) | A1 | | 3.0 | 3.0 | 3.0 | 3.0 | 3.0 | 3.0 | 3.0 | 3.0 | 3.0 |
| Biocide (iv-a) | Medetomidine | | 0.15 | 0.15 | 0.30 | 0.20 | 0.20 | 0.20 | 0.20 | 0.20 | 0.10 |
| Cu compounds (iv-b) | Copper(I) oxide #1 | | 1.0 | 1.0 | | 1.0 | 1.0 | 1.0 | 1.0 | 1.0 | 1.0 |
| | Copper powder # 1 | | 1.0 | 1.0 | 1.0 | 1.0 | 1.0 | | | | |
| | Copper(I) thiocyanate | | | 1.0 | 1.0 | | 1.0 | | | | |
| Other biocides | Copper pyrithione | | | | 1.0 | | 1.0 | 1.0 | | | |
| | Copper pyrithione and copper chelate complex mixture | | 3.0 | 3.0 | | 3.0 | | | 3.0 | 3.0 | 3.0 |
| | Zinc pyrithione | | | | | 1.0 | | | | | |
| | DCOIT #2 | | | | | | 1.0 | 1.0 | | | |
| | Tralopyril | | | | | | | | | | 1.0 |
| | Zineb | | | | | 1.0 | | 1.0 | | | |
| | Iron oxide red | | 5.0 | 5.0 | 5.0 | 5.0 | 5.0 | 5.0 | 5.0 | 5.0 | 5.0 |

| | | | **19** | **20** | **21** | **22** | **23** | **24** | **25** | **26** | **27** |
|---|---|---|---|---|---|---|---|---|---|---|---|
| Pigments and extenders | Talc | | 11.0 | 11.0 | 11.0 | 11.0 | 11.0 | 11.0 | 11.0 | 11.0 | 11.0 |
| | Zinc phosphate | | 27.5 | 27.5 | 27.5 | 27.5 | 27.5 | 27.5 | 27.5 | 27.5 | 27.5 |
| | Zinc oxide | | 6.5 | 6.5 | 6.5 | 6.5 | 6.5 | 6.5 | 6.5 | 6.5 | 6.5 |
| Additives | Tetraethoxysilane | | 1.0 | 1.0 | 1.0 | 1.0 | 1.0 | 1.0 | 1.0 | 1.0 | 1.0 |
| | Polyamide wax (20% in xylene) | | 1.5 | 1.5 | 1.5 | 1.5 | 1.5 | 1.5 | 1.5 | 1.5 | 1.5 |
| Solvents | Xylene | | 5.0 | 5.0 | 3.5 | 3.5 | 4.5 | 4.5 | 4.0 | 4.0 | 4.0 |
| | Aromatic hydrocarbons | | 2.0 | 2.0 | 2.0 | 2.0 | 2.0 | 2.0 | 2.0 | 2.0 | 2.0 |
| | Sum total | | 104.15 | 105.15 | 99.8 | 103.7 | 102.7 | 101.7 | 102.2 | 102.2 | 103.1 |
| Calculated values coating composition | Medetomidine (iv-a) content (wt%) | | 0.14 | 0.14 | 0.30 | 0.19 | 0.19 | 0.20 | 0.20 | 0.20 | 0.10 |
| | Cu compound (iv-b) content (wt%) | | 1.92 | 2.85 | 2.00 | 1.93 | 2.92 | 0.98 | 0.98 | 0.98 | 0.97 |
| | Total biocides (iv) content (wt%) | | 4.94 | 5.85 | 3.31 | 6.94 | 4.10 | 3.15 | 4.11 | 4.11 | 4.95 |
| | Total pigment, extender and biocide content (wt%) | | 53.0 | 53.4 | 53.4 | 55.2 | 53.7 | 53.3 | 53.0 | 53.0 | 53.4 |
| | VOC (g/L) | | 363 | 362 | 353 | 342 | 358 | 357 | 354 | 353 | 351 |
| | | | | | | | | | | | |
| Test results | Cone & plate viscosity (cP) | | 584 | 739 | 800 | 767 | 743 | 792 | 446 | 512 | 661 |
| | Raft Singapore | 1 month | 0 | 0 | 0 | 0 | 0 | 0 | 0 | 0 | 0 |
| | | 2 months | 1 | 0 | 0 | 0 | 0 | 0 | 0 | 0 | 0 |
| | | 4 months | 1 | 0 | 1 | 1 | 0 | 0 | 0 | 0 | 1 |
| | | 6 months | 1 | 1 | 1 | 1 | 0 | 0 | 0 | 0 | 1 |

**Table 9: Examples 28 to 32**

| | | | **28** | **29** | **30** | **31** | **32** |
|---|---|---|---|---|---|---|---|
| Binders (i) | S1 | | | 17.5 | 17.5 | 19.0 | |
| | S2 | | 19.0 | | | | 17.5 |
| Binders (iii) | Rosin solution (60% in xylene) | | | 18.5 | 18.0 | 19.0 | 19.5 |
| | Zn rosinate solution (Z1) | | 19.5 | | | | |
| Binder (v) | A1 | | 3.0 | 4.0 | 4.5 | 2.0 | 3.0 |
| Biocide (iv-a) | Medetomidine | | 0.20 | 0.20 | 0.20 | 0.20 | 0.20 |
| Cu compounds (iv-b) | Copper(I) oxide # 1 | | 1.0 | 1.0 | 1.0 | 1.0 | 1.0 |
| | Copper powder # 1 | | | 1.0 | 1.0 | 1.0 | 1.0 |
| Other biocides | Copper pyrithione | | 1.0 | | | | 1.0 |
| | Copper pyrithione and copper chelate complex mixture | | | 3.0 | 3.0 | 3.0 | |
| Pigments and extenders | Iron oxide red | | 5.0 | 5.0 | 5.0 | 5.0 | 5.0 |
| | Talc | | 11.0 | 11.0 | 11.0 | 11.0 | 11.0 |
| | Zinc phosphate | | 27.5 | 27.5 | 27.5 | 27.5 | 27.5 |
| | Zinc oxide | | 5.5 | 6.5 | 6.5 | 6.5 | 6.5 |
| Additives | Tetraethoxysilane | | 1.0 | 1.0 | 1.0 | 1.0 | 1.0 |
| | Polyamide wax (20% in xylene) | | 1.5 | 1.5 | 1.5 | 1.5 | 1.5 |
| Solvents | Xylene | | 4.0 | 4.0 | 4.0 | 4.0 | 4.0 |
| | Aromatic hydrocarbons | | 2.0 | 2.0 | 2.0 | 2.0 | 2.0 |

| | | | **28** | **29** | **30** | **31** | **32** |
|---|---|---|---|---|---|---|---|
| | Sum total | | 101.2 | 103.7 | 103.7 | 103.7 | 101.7 |
| | | | | | | | |
| | Medetomidine (iv-a) content (wt%) | | 0.20 | 0.19 | 0.19 | 0.19 | 0.20 |
| | Cu compound (iv-b) content (wt%) | | 0.99 | 1.93 | 1.93 | 1.93 | 1.97 |
| | Total biocides (iv) content (wt%) | | 2.17 | 5.01 | 5.01 | 5.01 | 3.15 |
| | Total pigment, extender and biocide content (wt%) | | 50.6 | 53.2 | 53.2 | 53.2 | 52.3 |
| | VOC (g/L) | | 362 | 353 | 353 | 354 | 360 |
| | | | | | | | |
| Test results | Cone & plate viscosity (cP) | | 583 | 552 | 557 | 535 | 750 |
| | Raft Singapore | 1 month | 0 | 0 | 0 | 0 | 0 |
| | | 2 months | 1 | 0 | 0 | 0 | 0 |
| | | 4 months | 1 | 1 | 1 | 0 | 1 |
| | | 6 months | 1 | 1 | 1 | 0 | 1 |

**Table 10: Comparative Examples C7 to C11**

| | | | **C7** | **C8** | **C9** | **C10** | **C11** |
|---|---|---|---|---|---|---|---|
| Binders (i) | S1 | | | 17.0 | 35.5 | 40.0 | 37.5 |
| | S2 | | 19.0 | | | | |
| Binder (iii) | Rosin solution (60% in xylene) | | 17.5 | 18.5 | | | |
| Binder (v) | A1 | | 3.0 | 3.0 | 4.5 | | 2.5 |
| Biocide (iv-a) | Medetomidine | | 0.20 | | 0.20 | 0.20 | 0.20 |
| Cu compounds (iv-b) | Copper(I) oxide # 1 | | | 1.0 | 1.0 | 1.0 | 1.0 |
| | Copper(I) oxide #2 | | | 1.0 | 1.0 | 1.0 | 1.0 |
| Other biocides | Copper pyrithione | | 1.0 | | | | |
| | Copper pyrithione and copper chelate complex mixture | | | 3.0 | 3.0 | 3.0 | 3.0 |
| | Zinc pyrithione | | | 1.0 | | | |
| | Zineb | | | 1.0 | | | |
| Pigments and extenders | Iron oxide red | | 5.0 | 5.0 | 5.0 | 5.0 | 5.0 |
| | Talc | | 11.0 | 11.0 | 11.0 | 11.0 | 11.0 |
| | Zinc phosphate | | 27.5 | 27.5 | 27.5 | 27.5 | 27.5 |
| | Zinc oxide | | 6.5 | 6.5 | 6.5 | 6.5 | 6.5 |
| Additives | Tetraethoxysilane | | 1.0 | 1.0 | 1.0 | 1.0 | 1.0 |
| | Polyamide wax (20% in xylene) | | 1.5 | 1.5 | 1.5 | 1.5 | 1.5 |
| Solvents | Xylene | | 4.0 | 3.5 | 4.0 | 4.0 | 4.0 |

| | | | **C7** | **C8** | **C9** | **C10** | **C11** |
|---|---|---|---|---|---|---|---|
| | Aromatic hydrocarbons | | 2.0 | 2.0 | 2.0 | 2.0 | 2.0 |
| | Sum total | | 99.2 | 103.5 | 103.7 | 103.7 | 103.7 |
| | | | | | | | |
| Calculated values for coating composition | Medetomidine (iv-a) content (wt%) | | 0.20 | - | 0.19 | 0.19 | 0.19 |
| | Cu compound (iv-b) content (wt%) | | - | 1.93 | 1.93 | 1.93 | 1.93 |
| | Total biocides (iv) content (wt%) | | 1.21 | 6.76 | 5.01 | 5.01 | 5.01 |
| | Total pigment, extender and biocide content (wt%) | | 51.4 | 55.1 | 53.0 | 53.0 | 53.0 |
| | VOC (g/L) | | 362 | 344 | 353 | 356 | 354 |
| | | | | | | | |
| Test results | Cone & plate viscosity (cP) | | 637 | 672 | 676 | 691 | 678 |
| | Raft Singapore | 1 month | 1 | 1 | 0 | 1 | 1 |
| | | 2 months | 4 | 1 | 1 | 3 | 4 |
| | | 4 months | 4 | 4 | 4 | 4 | 4 |
| | | 6 months | 4 | 4 | 4 | 4 | 4 |

### Comments to tables 8, 9 and 10:

Examples 19-32 in Tables 8 and 9 show examples of different binder components, different copper compounds, different additional biocides and different amounts of the components. All the examples show good antifouling performance.

Comparative examples C7 and C8 show that antifouling performance is poor if either a copper compound as defined in the present invention or medetomidine is missing.

Comparative examples C9, C10 and C11 show that if there is no rosin, modified rosin or metal salt therof present in the coating compositions the antifouling performance is poor.

**Table 11: Examples 33 to 37**

| | | | **33** | **34** | **35** | **36** | **37** |
|---|---|---|---|---|---|---|---|
| Binder (ii) | | A3 | 6.1 | 6.1 | 6.1 | 6.1 | 6.1 |
| Binder (iii) | | Rosin solution (60% in xylene) | 20.5 | 20.5 | 20.5 | 20.5 | 20.5 |
| Binder (v) | | A2 | 7.8 | 7.8 | 7.8 | 7.8 | 7.8 |
| Other binder | | Isostearic acid | 0.7 | 0.7 | 0.7 | 0.7 | 0.7 |
| Biocide (iv-a) | | Medetomidine | 0.2 | 0.2 | 0.2 | 0.2 | 0.2 |
| Cu compound (iv-b) | | Copper(I) oxide # 1 | 1.0 | 1.0 | 1.0 | | |
| | | Copper powder # 1 | 1.0 | | | | 1.0 |
| | | Copper(II) sulfide | 4.8 | 5.1 | 0.5 | 5.2 | 5.1 |
| Other biocides | | Copper pyrithione | 1.0 | 1.0 | 1.0 | | 0.7 |
| | | DCOIT #1 | 3.5 | | 3.2 | 3.5 | |
| | | DCOIT #2 | | 1.2 | | | 1.2 |
| | | Zineb | | 1.0 | | 1.0 | |
| Pigments and extenders | | Iron oxide red | 5.0 | 5.0 | 5.0 | 5.0 | 5.0 |
| | | Dolomite | 40.0 | 34.5 | 42.0 | 40.0 | 36.0 |
| | | Zinc oxide | 7.5 | 7.5 | 7.5 | 7.5 | 7.5 |
| Additives | | Organoclay | 1.0 | 1.0 | 1.0 | 1.0 | 1.0 |
| | | Wetting and dispersing agent | 1.0 | 1.0 | 1.0 | 1.0 | 1.0 |
| Solvents | | Xylene | 7.1 | 8.7 | 7.1 | 7.1 | 8.7 |
| | | Sum total | 108.2 | 102.3 | 104.6 | 106.7 | 102.5 |

| | | | **33** | **34** | **35** | **36** | **37** |
|---|---|---|---|---|---|---|---|
| | | | | | | | |
| Calculated values for coating composition | Medetomidine (iv-a)content (wt%) | | 0.18 | 0.20 | 0.19 | 0.19 | 0.20 |
| | Cu compound (iv-b) content (wt%) | | 6.28 | 5.96 | 1.43 | 4.88 | 5.95 |
| | Total biocides (iv) content (wt%) | | 8.36 | 9.05 | 3.50 | 6.99 | 7.77 |
| | Total pigment, extender and biocide content (wt%) | | 57.8 | 56.2 | 56.6 | 57.2 | 56.3 |
| | VOC (g/L) | | 353 | 353 | 353 | 354 | 354 |
| | | | | | | | |
| Test results | Raft Singapore | 1 month | 0 | 0 | 0 | 0 | 0 |
| | | 2 months | 0 | 0 | 1 | 0 | 0 |
| | | 4 months | 0 | 0 | 0 | 0 | 0 |
| | | 6 months | 1 | 1 | 1 | 1 | 1 |

**Table 12: Comparative examples C12 to C14**

| | | | **C12** | **C13** | **C14** |
|---|---|---|---|---|---|
| Binder (ii) | A3 | | 6.1 | 6.1 | 6.1 |
| Binder (iii) | Rosin solution (60% in xylene) | | 20.5 | 20.5 | 20.5 |
| Binder (v) | A2 | | 7.8 | 7.8 | 7.8 |
| Other binder | Isostearic acid | | 0.7 | 0.7 | 0.7 |
| Cu compound (iv-b) | Copper(I) oxide #1 | | | 1.0 | |
| | Copper powder #1 | | | | 1.0 |
| | Copper(II) sulfide | | 5.1 | | |
| Other biocides | Copper pyrithione | | 1.0 | 1.0 | 1.0 |
| | DCOIT #1 | | | | 2.3 |
| | DCOIT #2 | | | 1.2 | |
| | Zineb | | | 1.0 | 1.0 |
| Pigments and extenders | Iron oxide red | | 5.0 | 5.0 | 5.0 |
| | Dolomite | | 39.0 | 39.0 | 40.0 |
| | Zinc oxide | | 7.5 | 7.5 | 7.5 |
| Additives | Organoclay | | 1.0 | 1.0 | 1.0 |
| | Wetting and dispersing agent | | 1.0 | 1.0 | 1.0 |
| Solvents | Xylene | | 8.6 | 8.6 | 7.4 |
| | Sum total | | 103.3 | 100.4 | 102.3 |
| | | | | | |
| Calculated values for coating composition | Medetomidine (iv-a)content (wt%) | | - | - | - |
| | Cu compound (iv-b) content (wt%) | | 4.94 | 1.00 | 0.98 |
| | Total biocides (iv) content (wt%) | | 5.91 | 3.19 | 3.61 |
| | Total pigment, extender and biocide content (wt%) | | 56.7 | 55.5 | 55.9 |
| | VOC (g/L) | | 353 | 353 | 354 |
| | | | | | |
| Test results | Raft Singapore | 1 month | 1 | 0 | 0 |
| | | 2 months | 1 | 1 | 1 |
| | | 4 months | 2 | 2 | 2 |
| | | 6 months | 2 | 4 | 4 |

### Comments to Table 11 and Table 12

Example 33 to 37 in Table 11 show examples of the binder combination of (meth)acrylic copolymer (v) and (meth)acrylic copolymer (ii). No (meth)acrylic silyl ester copolymer (i) is present in example 33 to 37.

In comparative examples C12 to C14 in Table 12 medetomidine is absent and the antifouling performance is then poorer.

## Claims

1. An antifouling coating composition comprising:
(i) a (meth)acrylic silyl ester copolymer comprising at least 15 wt% silyl ester monomers, relative to the total weight of monomers present in the (meth)acrylic silyl ester copolymer; and/or
(ii) a (meth)acrylic copolymer comprising 10 wt% or less of silyl ester monomers and 5.0 wt% or less of metal ester monomers, relative to the total weight of monomers present in the (meth)acrylic copolymer, which has a Tg of 10.0 °C or more;
(iii) rosin, modified rosin or a metal salt of rosin or a modified rosin;
(iv) biocides comprising:
a. medetomidine; and
b. one or more copper compounds having a copper content of at least 40 wt%, relative to the formula weight of the copper compound,
wherein the coating composition as a whole comprises 10.0 wt% or less of biocides;
(v) a (meth)acrylic copolymer comprising 10 wt% or less of silyl ester monomers and 5.0 wt% or less of metal ester monomers, relative to the total weight of monomers present in the (meth)acrylic copolymer, which has a Tg below 10.0 °C, preferably below 0 °C, more preferred below - 5 °C, even more preferred below -10 °C, comprising
a. monomer of formula II: 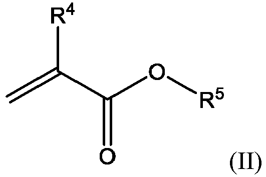 wherein R⁴ is H or CH₃, and R⁵ is a C1-C20 hydrocarbyl substituent; and
b. 0.5 to 10 wt% of at least one carboxylic acid containing monomer; and
(vi) at least 35 wt% of pigments, extenders and biocides combined, relative to the total weight of the coating composition as a whole.

2. The antifouling coating composition as claimed in claim 1, wherein said composition comprises a (meth)acrylic silyl ester copolymer (i).

3. The antifouling coating composition as claimed in claim 1, wherein said composition comprises a (meth)acrylic copolymer (ii) or wherein said composition comprises a (meth)acrylic copolymer (ii) and a (meth)acrylic silyl ester copolymer (i).

4. The antifouling coating composition as claimed in any preceding claim, wherein the composition comprises 8.0 wt% or less of biocides, relative to the total weight of the coating composition as a whole, preferably 5.0 wt% or less.

5. The antifouling coating composition as claimed in any preceding claim, wherein the copper compound has a copper content of at least 50 wt%, such as copper (I) oxide.

6. The antifouling coating composition as claimed in any preceding claim, wherein medetomidine is present in an amount of 0.05 to 1.0 wt%, relative to the total weight of the composition, preferably 0.05 to 0.6 wt%, even more preferably 0.1 to 0.4 wt% and/or
wherein the one or more copper compound is present in an amount of 0.1 to 8.0 wt%, relative to the total weight of the composition preferably 0.2 to 5.0 wt%, more preferably 0.3 to 3.0 wt%.

7. The antifouling coating composition as claimed in any preceding claim, wherein the (meth)acrylic silyl ester copolymer (i) comprises structural units derived from the following monomers:
(a) a silyl ester monomer of formula (I), 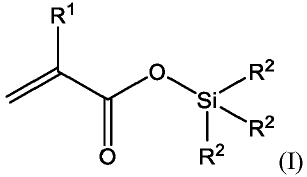
wherein R¹ is H or CH₃;
R² is each independently selected from C1-C10 hydrocarbyl groups, preferably isopropyl;
(b) one or more monomer(s) of formula (II) 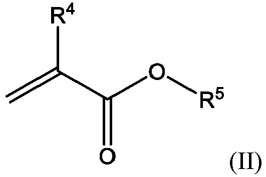 wherein R⁴ is H or CH₃, and R⁵ is a C1-C20 hydrocarbyl substituent preferably a C1-10 alkyl substituent; and optionally
(c) one or more monomers of formula (III) 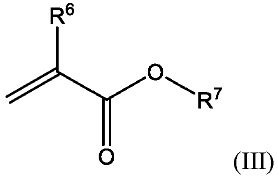 wherein R⁶ is H or CH₃, and R⁷ is a C3-C20 substituent containing at least one oxygen or nitrogen atom, preferably at least one oxygen.

8. The antifouling coating composition as claimed in preceding claim, wherein the (meth)acrylic copolymer (v) comprises, such as consists of,
(a) one or more monomer(s) of formula (II) 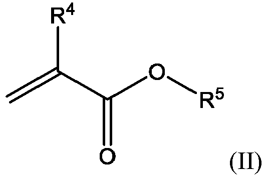 wherein R⁴ is H or CH₃, and R⁵ is a C1-C20 hydrocarbyl substituent, most preferably methyl, ethyl, n-propyl, n-butyl or 2-ethylhexyl and
(b) (meth)acrylic acid

9. The antifouling coating composition as claimed in 8 wherein the monomer of formula (II) is methyl methacrylate, ethyl acrylate, n-butyl acrylate, n-butyl methacrylate, isobutyl methacrylate or isooctyl acrylate.

10. The antifouling coating composition as claimed in any preceding claim wherein the (meth)acrylic ester copolymer (ii) comprises such as consists of:
(a) one or more monomer(s) of formula (II) 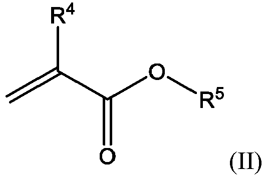 wherein R⁴ is H or CH₃, and R⁵ is a C1-C20 hydrocarbyl substituent preferably a C1-10 alkyl substituent, most preferably methyl, ethyl, n-propyl, n-butyl or 2-ethylhexyl; and
(b) one or more monomers of formula (VI) 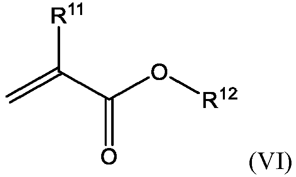 wherein R¹¹ is H or CH₃, and R¹² is a C3-20 substituent, such as C3-C10 substituent, containing at least one oxygen or nitrogen atom, preferably at least one oxygen atom or R¹² represents a poly(alkylene glycol) group.

11. The antifouling coating composition as claimed in any preceding claim, wherein component (i) is present in an amount of 2.0 to 40 wt%, relative to the total weight of the coating compositions as a whole, preferably 5.0 to 30 wt%; and/or
wherein component (v) is present in an amount of 0.5 to 10 wt%, relative to the total weight of the coating compositions as a whole, preferably 1.0 to 5.0 wt%; and/or
wherein the rosin, modified rosin or metal salt thereof (iii) is present in an amount of 5.0 to 25 wt% based on the total weight of the coating composition as a whole.

12. The antifouling coating composition as claimed in any preceding claim, wherein compound (iii) is gum rosin, hydrogenated gum rosin, copper salt of gum rosin, zinc salt of gum rosin, zinc salt of hydrogenated gum rosin, copper salt of hydrogenated gum rosin and mixtures thereof.

13. The antifouling coating composition as claimed in any preceding claim, further comprising one or more biocides selected from zinc pyrithione, copper pyrithione, zineb and 4,5-dichloro-2-octyl-4-isothiazolin-3-one.

14. The antifouling coating composition as claimed in any preceding claim comprising:
component (i) in an amount of 2.0 to 30 wt%, relative to the total weight of the coating compositions as a whole, preferably 5.0 to 25 wt%;
component (v) in an amount of 0.5 to 10 wt%, relative to the total weight of the coating compositions as a whole, preferably 1.0 to 5.0 wt%;
and component (iii) in an amount of 5.0 to 30 wt% based on the total weight of the coating composition as a whole;
medetomidine in an amount of 0.05 to 1.0 wt%, relative to the total weight of the composition, preferably 0.05 to 0.7 wt%, more preferably 0.05 to 0.5 wt%, even more preferably 0.1 to 0.3 wt%; and
one or more copper compounds in an amount of 0.1 to 8.0 wt%, relative to the total weight of the composition preferably 0.2 to 5.0 wt%, more preferably 0.3 to 3.0 wt%; or
component (ii) in an amount of 2.0 to 30 wt%, relative to the total weight of the coating compositions as a whole, preferably 5.0 to 25 wt%;
component (v) in an amount of 0.5 to 10 wt%, relative to the total weight of the coating compositions as a whole, preferably 1.0 to 5.0 wt%;
component (iii) in an amount of 5.0 to 30 wt% based on the total weight of the coating composition as a whole;
medetomidine in an amount of 0.05 to 1.0 wt%, relative to the total weight of the composition, preferably 0.05 to 0.7 wt%, more preferably 0.05 to 0.5 wt%, even more preferably 0.1 to 0.3 wt%; and
one or more copper compounds is present in an amount of 0.1 to 8.0 wt%, relative to the total weight of the composition preferably 0.2 to 5.0 wt%, more preferably 0.3 to 3.0 wt%;
wherein the antifouling coating composition comprises pigments and/or extenders and the combined total of pigments, extenders and biocides is 35 wt% or more.

15. A process for protecting an object from fouling, said process comprising coating at least a part of said object which is subject to fouling with an antifouling coating composition as claimed in any of claims 1 to 14.

16. An object coated with the antifouling coating composition as claimed in any of claims 1 to 14.
